# EUROPEAN PATENT APPLICATION

(11) **EP 0 944 008 A2**
(43) Date of publication of application: **22.09.1999**
(21) Application number: 98309230.5
(22) Date of filing: 11.11.1998
(51) Int. Cl.: G06F 17/30

(54) **Service providing apparatus and service providing system**

(30) Priority: 16.03.1998 JP 6515498; 14.07.1998 JP 19863398
(71) Applicant: Digital Vision Laboratories, Minato-ku, Tokyo (JP)
(72) Inventor: Aoike, Hitoshi, c/o Digital Vision Lab., Tokyo (JP); Aisaka, Kazuo, c/o Digital Vision Lab., Tokyo (JP)
(74) Representative: Cooper, John

(57) **Abstract**

A service providing system according to the present invention is adapted to systematically providing a diversity of services for the user. The service providing system includes a service providing apparatus (10; 210) and an input device (20, 21, 22, 23, 24, 25; 220). The service providing apparatus (10; 210) comprises a computer unit (12) capable of executing a predetermined program each having its program ID. Each of the services also has its service ID associated with at least one of the programs. The user can input a service ID through the input device (20, 21, 22, 23, 24, 25; 220) to the service providing apparatus (10; 210) to specify a desired service. The computer unit (12) has a CPU (34) and a memory (33). The memory (33) has a predetermined relational table between the service ID and corresponding program IDs which are appropriate to the service ID. The service providing apparatus (10; 210) is operated to select at least one of program IDs from the relational table on the basis of the inputted service ID to display a service information table (D1 and D2) on its screen. The service providing apparatus (10; 210) thus constructed allows the user to select a procedure for the desired service from the service information table (D1 and D2), there by making it possible to execute the appropriate programs to perform various functions according to the selected procedure.

## Description

### BACKGROUND OF THE INVENTION

### 1. Field of the Invention

The present invention relates to a service providing apparatus and a service providing system for systematically providing a diversity of services for a user appropriately.

### 2. Description of the Related Art

There have so far been proposed a wide variety of service providing systems, such as an interactive television broadcasting system, a digital communication system, and so on, for providing a diversity of services for a user.

The conventional interactive television broadcasting system comprises an interactive television apparatus including a television unit and a computer unit. The interactive television apparatus is adapted to provide the user with attendant information as well as a broadcasting program. The information can be interactively provided for the user through a predetermined procedure previously determined by a producer in a broadcasting station so that the timing of the provision of the information is appropriately synchronized with the variation of the broadcasting program.

The television unit is operated to receive a broadcasting signal from the broadcasting station to produce the broadcasting program from the received signal, while the computer unit is operated to execute a predetermined program through the predetermined procedure to prepare the attendant information.

The determination of the procedure for executing the program is troublesome for the producer and has a less adaptability to user's need, accordingly, the user cannot customize the procedure at user's pleasure in the conventional interactive television broadcasting system.

The conventional digital communication system comprises a server and a terminal. The terminal is adapted to provide the user with diverse services by conversing with the server on a predetermined communication path, such as a commercial network including an Internet, a satellite communication path, and a cable transmission path, or an in-house network, such as an Intranet. The digital communication system can asynchronously provide on the communication path with a diversity of sub information and services, such as news, program data and so forth, to perform diverse functions associated with main information and service.

The sub information and services can be provided in connection with the main information and service by executing a predetermined program through a predetermined procedure. In the digital communication system, the procedure for executing the program can be determined by the user as well as a producer in the server.

The digital communication system thus constructed can provide the user with information on a commodity and news, and services for ordering the commodity.

The service providing system has a drawback encountered as described below.

When the user intends to use one of the services provided by such service providing system, the user must search desired service and function from a diversity of services and functions to be specified. As a diversity of services and functions provided by the service providing system are increased, the operation of the service providing system becomes more complicated. There have been grown a desire of the service providing system to more systematically providing a diversity of services.

Moreover, some users cannot see the information multiplied with the broadcasting program after watching the broadcasting program in the conventional system because the information is multiplied only synchronously with the broadcasting program and cannot be stored in the system.

### SUMMARY OF THE INVENTION

It is a first object of the present invention to provide a service providing apparatus for systematically providing a diversity of services for a user. The service providing apparatus allows the user to select a procedure appropriate to each of the services.

It is a second object of the present invention to provide a service providing apparatus for systematically providing a diversity of services for a user under a predetermined condition previously determined by the user.

It is a third object of the present invention to provide a service providing system for systematically providing a diversity of services for a user. The service providing system allows the user to select a procedure appropriate to each of the services by conversing with a service provider.

It is a fourth object of the present invention to provide a service providing method of systematically providing a diversity of services for a user. In the service providing method, the user can select a procedure appropriate to each of the services.

It is a fifth object of the present invention to provide a service providing method of systematically providing a diversity of services for a user under a predetermined condition previously determined by the user.

In accordance with a first aspect of the present invention, there is provided a service providing apparatus for systematically providing a user with a diversity of services each having a predetermined service identifier. The service providing apparatus comprises: inputting means for inputting therethrough the service identifier to the service providing apparatus to specify one of the services; procedure selection means for selecting a procedure appropriate to the service identifier inputted through the inputting means from among a plurality of predetermined procedures; and executing means for performing the selected procedure on the basis of a predetermined service information to serve a predetermined function.

In the service providing apparatus, the executing means may be capable of executing a predetermined information processing program to perform the predetermined function on the basis of the service information. In this case, the procedure selection means may select the information processing program on the basis of the service identifier inputted through the inputting means to be executed by the executing means.

In the service providing apparatus, each of the information processing programs may have a program identifier thereof. The procedure selection means may then store therein a plurality of program identifiers associated with at least one service identifier and selecting the program identifiers appropriate to the inputted service identifier from among the stored program identifiers.

In the service providing apparatus, the procedure selection means may be capable of displaying a plurality of icons indicative of the predetermined functions corresponding to the selected information processing programs, thereby allowing the user to select one of the displayed icons to specify one of the functions. The executing means may then execute the information processing program corresponding to the specified function in accordance with the user's selection of the icon to perform the specified function.

In the service providing apparatus, the procedure selection means preferably may have an identifier storing unit for storing therein the service identifier and the corresponding program identifiers. In this case, the procedure selection means may be provided with the service identifier and the corresponding program identifiers by a predetermined identifier information source to store the provided service identifier and the corresponding program identifiers in the identifier storing unit.

In the service providing apparatus, the procedure selection means may request the identifier information source to supply the program identifiers when the service identifier inputted through the inputting means is excluded from the identifier storing unit.

In the service providing apparatus, the executing means may be provided with the information processing program corresponding to the program identifier by a predetermined program providing source.

In the service providing apparatus, the executing means may have a program storing unit for storing therein a plurality of the information processing programs corresponding to the program identifiers stored in the procedure selection means.

In the service providing apparatus, the service identifier may consist of the predetermined number of characters. The inputting means may allow the user to enter the characters to input the service identifier therethrough.

The service providing apparatus may further comprise availability judgement means for judging whether the service identifier inputted through the inputting means is available or not on the basis of availability information indicative of an availability of the service identifier. The availability information may be provided by a predetermined identifier information source.

In the service providing apparatus, the inputting means may input attendant property information accompanying the service identifier therethrough. The procedure selection means may select the information processing programs to be executed by the executing means on the basis of the attendant property information and the service identifier.

In the service providing apparatus, the executing means may request a predetermined service providing source to retrieve and transmit therefrom the service information related to the specified service to execute the selected information processing program to perform the function on the basis of the transmitted service information.

In the service providing apparatus, the executing means may be provided with predetermined information processing program and data by a predetermined program providing source, so that the executing means becomes capable of implementing the additional procedures.

The service providing apparatus preferably may comprise updating time judgement means for judging whether the information processing program and the program identifier should be updated or not on the basis of version information on at least one of the information processing program and the program identifier.

In the service providing apparatus, the service information may include information on a commodity.

The service providing apparatus may further comprise data storage means for storing therein the service information related on the specified service.

In the service providing apparatus, the inputting means may input therethrough the service identifier associated with the service by way of a predetermined service information medium.

In the service providing apparatus, the service information medium may be capable of visibly outputting information on the service recorded thereon. The service information medium may have information on the service written on a paper. The service information medium may have information on the service transmitted from outside to the service providing apparatus therethrough. The service information medium may probably have information on the service broadcast by a broadcasting station.

In the service providing apparatus, the availability information may indicate a term of validity of the service identifier. Probably, the availability information may indicate a version number of the service identifier.

In the service providing apparatus, the inputting means may receive a predetermined linked signal multiplexed with a predetermined broadcasting program to prepare the service identifier on the basis of the received linked signal to automatically input the prepared service identifier therethrough in response to the received linked signal. In the aforesaid service providing apparatus, the procedure selection means may select the information processing programs on the basis of the automatically inputted service identifier. The executing means may execute the selected information processing program so as to follow the operation of the predetermined broadcasting program.

In the service providing apparatus, the linked signal may include attendant information on a present scene in the broadcasting program. In the service providing apparatus, the linked signal may include a synchronous signal multiplexed with the broadcasting program and synchronized with a present scene in the broadcasting program.

The service providing apparatus may further comprise a time control unit for controlling an execution time of the procedure selection means and the executing means so that an operation time needed to start executing the information processing program after receiving the linked signal is limited to a predetermined limit time.

In the service providing apparatus, the information processing program may be executed by the executing means to start recording the broadcasting program on video. The information processing program may be executed by the executing means to change channels to the channel through which the broadcasting program is broadcast.

In accordance with a second aspect of the present invention, there is provided a service providing apparatus in which the inputting means of the service providing apparatus has a condition storing unit for storing therein a predetermined retrieval condition previously determined by the user. The information processing program is executed under the retrieval condition by the executing means. The inputting means of the service providing apparatus further has: a matching criterion determination unit for determining a matching criterion for judging whether the service identifier is matched with the retrieval condition and the information processing program or not; and a matching judgement unit for judging whether the service identifier is matched with the matching criterion determined by the matching criterion determination unit or not.

In the service providing apparatus, the inputting means may receive a predetermined linked signal including the service identifier and multiplied with a predetermined providing service provided from the service providing source.

In the service providing apparatus, the matching criterion determination unit may receive the service identifier and its attribute information both of which correspond to a new linked signal multiplexed with a predetermined broadcasting program from a predetermined identifier attribute information source, and determine the matching criterion for judging whether the received new linked signal is matched with the retrieval condition and the information processing program or not.

In the service providing apparatus, the matching criterion determination unit may transmit the retrieval condition to a predetermined service provider to request the service provider to determine the matching criterion according to the transmitted retrieval condition, and receive the determined matching criterion from the service provider. Furthermore, the matching judgement unit may judge whether the linked signal is matched with the received matching criterion or not.

In the service providing apparatus, the inputting means may receive an attribute information on the service corresponding to the service identifier. The attribute information on the service may be multiplied with the linked signal. The inputting means may have: a condition storing unit for storing therein a predetermined retrieval condition previously determined by the user, the information processing program being executed under the retrieval condition by the executing means so that the operation of the information processing program is synchronized with the operation of the predetermined broadcasting program; a matching criterion determination unit for determining, according to the attribute information, a matching criterion for judging whether the linked signal is matched with the retrieval condition and the information processing program or not; and a matching judgement unit for judging whether the received linked signal is matched with the matching criterion determined by the matching criterion determination unit or not. The inputting means thus constructed may input therethrough the service identifier corresponding to the received attribute information which is judged to be matched with the matching criterion by the matching judgment unit.

The service providing apparatus may further comprise information storing means for storing therein information on the services provided by the service information medium. In the service providing apparatus, the service information medium may have information on an image.

The inputting means may input therethrough the service identifier previously determined by the user. In this case, the service providing apparatus may further comprise identifying means for conferring the previously inputted service identifier on the specified service information stored in the information storing means to be identifiable. The information storing means may store therein the information having the service identifier.

In the service providing apparatus, the service information related to the specified service may include information on an image provided by media.

In accordance with a third aspect of the present invention, there is provided a service providing system comprising: a service providing apparatus for systematically providing a user with a plurality of services each having a predetermined service identifier. The service providing apparatus comprises: inputting means for inputting therethrough the service identifier to specify one of the services; procedure selection means for selecting a procedure appropriate to the service identifier inputted through the inputting means from among a plurality of predetermined procedures; and executing means for performing the selected procedure on the basis of a predetermined service information to serve a predetermined function. The service providing system further comprise: a service providing source capable of providing the service information for the service providing apparatus; and information control means for executing the information processing program selected by the procedure selection means of the service providing apparatus and being provided with the service information by the service providing source to output the service information to the service providing apparatus.

In accordance with a fourth aspect of the present invention, there is provided a service providing method of systematically providing a user with a diversity of services each having a predetermined service identifier. The service providing method comprising steps of:
(a) inputting the service identifier to specify one of the services;
(b) selecting a procedure appropriate to the service identifier inputted in the step (a) from among a plurality of predetermined procedures; and
(c) performing the selected procedure on the basis of a predetermined service information to serve a predetermined function.

In the service providing method, the step (c) may have a step of executing a predetermined information processing program to perform the predetermined function on the basis of the service information. The step (b) may have a step of selecting the information processing program on the basis of the service identifier inputted in the step (a) to be executed in the step (c).

In the service providing method, the step (a) may have a step of receiving a predetermined linked signal multiplexed with a predetermined broadcasting program to prepare the service identifier corresponding to the received linked signal to automatically input the prepared service identifier therethrough in response to the received linked signal. The step (b) may have a step of selecting the information processing programs corresponding to the automatically inputted service identifier. The step (c) may have a step of executing the selected information processing program so as to follow the operation of said predetermined broadcasting program.

In accordance with a fifth aspect of the present invention, there is provided a service providing method in which the step (a) may have:
(a1) storing therein a predetermined retrieval condition previously determined by the user, the information processing program being executed under the retrieval condition by the executing step of the step (c);
(a2) determining a matching criterion for judging whether the service identifier is matched with the retrieval condition and the information processing program or not; and
(a3) judging whether the service identifier is matched with the matching criterion determined in the step (a2) or not.

### BRIEF DESCRIPTION OF THE DRAWINGS

The present invention and many of the advantages thereof will be better understood from the following detailed description when considered in connection with the accompanying drawings, wherein:
FIG. 1 is a block diagram schematically showing the service providing apparatus according to the present invention;
FIG. 2 is a block diagram showing a first preferred embodiment of the service providing system including the service providing apparatus according to the present invention;
FIG. 3 is a schematic block diagram showing the configuration of the service providing apparatus shown in FIG. 2;
FIG. 4 is a memory map of the memory of the service providing apparatus shown in FIG. 3;
FIG. 5 is a front view of a remote control device utilized for the service providing apparatus shown in FIG. 2;
FIG. 6 is a flowchart showing the flow of a fundamental process of the service providing apparatus shown in FIG. 2;
FIG. 7 is a flowchart showing the flow of an example of a process of the service providing apparatus shown in FIG. 2;
FIG. 8 is a flowchart showing the flow of a judgement routine called by the process shown in FIG. 7;
FIG. 9 is a diagram showing a table screen displayed on the displaying unit of the service providing apparatus shown in FIG. 3;
FIG. 10 is a block diagram showing a second preferred embodiment of the service providing system and apparatus according to the present invention;
FIG. 11 is a schematic block diagram showing the configuration of the service providing apparatus shown in FIG. 10;
FIG. 12 is a memory map of the memory of the service providing apparatus shown in FIG. 11;
FIG. 13 is a front view of a remote control device utilized for the service providing apparatus shown in FIG. 10;
FIG. 14 is a flowchart showing the flow of a fundamental process of the service providing apparatus shown in FIG. 10;
FIG. 15 is a flowchart showing the flow of a customizing routine called by the fundamental process shown in FIG. 14; and
FIG. 16 is a flowchart showing the flow of another main program executed by the service providing apparatus shown in FIG. 10.

### DESCRIPTION OF THE PREFERRED EMBODIMENTS

Throughout the following detailed description, similar reference characters and numerals refer to similar elements in all figures of the drawings.

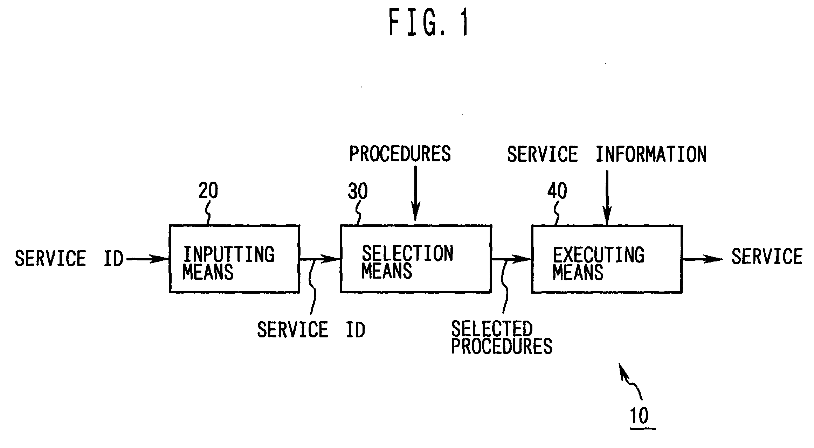

Referring now to FIG. 1 of the drawings, there is best shown the service providing apparatus 10 according to the present invention. The service providing apparatus 10 comprises inputting means 20, procedure selection means 30 and executing means 40 and is adapted to systematically provide a user with a diversity of services each having a predetermined service identifier (hereinlater referred to simply as "service ID").

The inputting means 20 is designed to input therethrough the service ID to the service providing apparatus 10 to specify one of the services. The procedure selection means 30 is designed to select at least a procedure appropriate to the service ID inputted through the inputting means 20 from among a plurality of predetermined procedures. The executing means 40 is designed to perform the selected procedure on the basis of a predetermined service information to serve a predetermined function.

The service providing apparatus 10 thus constructed can systematically provide the user with a diversity of services according to the procedure appropriate to the service. The appropriate procedure can be selected optionally from a plurality of procedures.

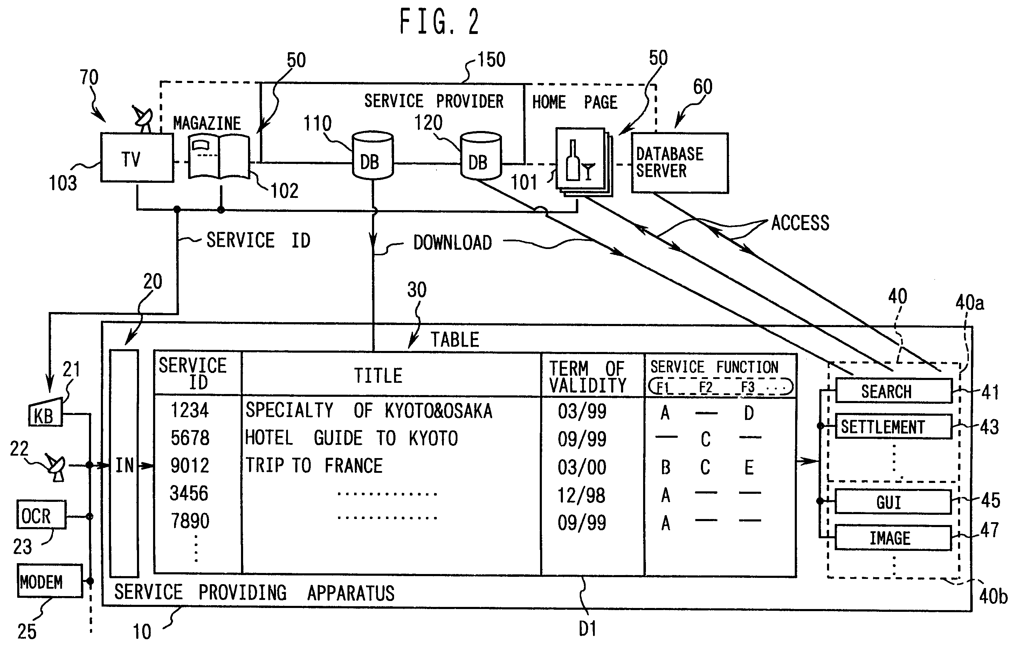

Referring now to FIGS. 2 through 9 of the drawings, there is shown a first preferred embodiment of the above service providing system according to the present invention. The first embodiment of the service providing system is applied to a client server system comprising a server machine and a client machine not shown in the drawings concretely. The client machine serves as a terminal capable of conversing with the server machine. The server machine has a diversity of services information provided for the client machine, i.e., the terminal.

As shown in FIG. 2, the terminal of the service providing system comprises a service providing apparatus 10 electrically connected to a diversity of input devices, for example, a keyboard 21, a mouse (not shown), a radio wave receiver including antenna 22, an optical character reader (OCR) 23, a modem 25, and so forth. These input devices are adapted to receive information on the service ID to have the service ID inputted into the service providing apparatus 10 therethrough.

The inputting means 20 is electrically connected to the input devices and designed to input therethrough the service ID from the input devices to the service providing apparatus 10 to specify one of the services corresponding to the inputted service ID. In this embodiment, a diversity of services are provided for the user by a predetermined service provider 150 including, but not limited to, an information providing source 50, a service providing source 60, a broadcasting service information source 70, an identifier database 110 and a program database 120 which will be described in detail later.

The procedure selection means 30 is designed to select at lease a predetermined procedure appropriate to the service ID inputted through the inputting means 20 from among a plurality of predetermined procedures. The procedure selection means 30 is prepared and stored therein with a service information table indicating the selected procedure. The user can be aware of information on the specified service and select desired service and function according to the indicated procedure in the service information table. In this embodiment, the service information table has a service ID corresponding to the specified service, a title of the service, a term of validity of the service information and functions appropriate to the service ID.

The executing means 40 is designed to perform the procedure selected by the procedure selection means 30 on the basis of a predetermined service information to serve the predetermined functions having an enhanced function 40a and a prime function 40b. The enhanced function 40a includes, but not limited to, an information search function 41, a subscribing and reservation function (not shown), a service charge function (not shown), a charge settlement function 43 and so on. The executing means 40 can perform the enhanced function 40a by conversing with the service provider 150. The prime function 40b includes a graphical user interface (hereinafter referred to simply as "GUI") function 45, a motion picture display function 47, a sound producing function (not shown), a peripheral device control function (not shown) and so forth.

The predetermined service information is transmitted from the predetermined service provider 150 by way of a predetermined communication path, such as a two-way communication line, a cable television network, a public telephone circuit and other wired communication lines. The service providing apparatus 10 may comprise a predetermined storage device (not shown) for storing therein the transmitted service information to be retrieved by the executing means 40.

The executing means 40 is capable of executing a predetermined information processing program to perform the above predetermined functions 40a and 40b on the basis of the service information. The information processing program may be a script program. The information processing programs may be written in various languages and held in predetermined files in executable form appropriate to the type of each of the terminals of the service providing system.

Before the executing means 40 is operated to execute the information processing program, the procedure selection means 30 is operated to select at least one of the information processing programs corresponding to the service ID inputted through the inputting means 20 to be executed by the executing means 40. Each of the information processing programs has a program identifier (hereinlater referred to as "program ID") thereof. The service ID corresponds to at least one of the program IDs. The procedure selection means 30 is capable of storing therein a plurality of the program IDs associated with at least one service ID. When the service ID is inputted through the inputting means 20, the procedure selection means 30 is operated to select the program IDs appropriate to the inputted service ID from among the stored program IDs.

The detailed description of the service provider 150 will be described hereinafter.

The information providing source 50 of the service provider 150 includes the server machine capable of providing the client machine with a diversity of information such as commodity information, leisure information, academic information, news information, industrial information, public information and so forth. These informations are provided for the user through various kinds of information media being capable of visibly outputting information on the service recorded or displayed thereon, and including multi-media 101 and a publication medium 102. The multi-media 101 may include a homepage identifiable according to a predetermined URL (Uniform Resource Locator) on a WWW (World Wide Web). The publication medium 102 has the information on the service written on a paper and includes a magazine, a book, a newspaper and a leaflet.

The service providing source 60 of the service provider 150 includes the server machine capable of communicating with the terminal to perform a variety of the above predetermined enhanced functions 40a.

The broadcasting service information source 70 of the service provider 150 includes a broadcasting station for broadcasting the broadcasting program 103 on two-way communication with the service providing apparatus 10.

It will be appreciated that the inputting means 20 may input therethrough the service ID associated with the service by way of a predetermined service information medium, i.e., the multi-media 101, the publication medium 102 and the broadcasting program 103. The multi-media 101 and the broadcasting program 103 may have information on the service transmitted from outside to the service providing apparatus 10 therethrough. The service providing apparatus 10 may establish various communication, such as a radio communication, a cable transmission, a public telephone network and so forth, with the service provider 150. Furthermore, the information medium may include attendant information associate with an image information.

The identifier database 110 of the service provider 150 is capable of storing therein a relational table between the service ID and the program IDs and various kinds of information on the service. The information on the service may have a title of the service and a term of validity of the service ID regularly updated. The program database 120 of the service provider 150 is capable of storing therein the information processing program for performing the function and various kinds of the information on the information processing program. In the service providing system according to the present invention, the terminal machine may selectively include the aforementioned sources 50, 60 and 70 and the aforesaid databases 110 and 120 associated with the service providing apparatus 10.

In this embodiment, the service ID consists of the predetermined number of characters, such as a numeral, an alphabet, a symbol and a combination thereof, so that the inputting means 20 allows the user to enter the predetermined number of characters to input the service ID therethrough. The user can visually recognize information on the service and its service ID according to a variety of the information media as described above. Accordingly, the user can specify a desired service by entering the characters indicative of the service ID of the selected service by way of the keyboard 21.

The service ID may be included in an information signal multiplied with the broadcasting program 103. The information signal is received from the broadcasting service information source 70 through the antenna 22 to obtain the service ID, so that the obtained service ID can be inputted through the inputting means 20 to the service providing apparatus 10.

The service ID may be represented by an information code, such as a bar code, recorded on a readable surface of an object. This information code may be optically read and recognized as the represented service ID by the OCR 23, so that the recognized service ID can be inputted through the inputting means 20 to the service providing apparatus 10.

The service ID may be stored in electric media (not shown), such as a DVD, a CD-ROM, a floppy disk, an MD, a fixed disk and so forth. The stored service ID is read by an appropriate drive unit (not shown) to obtain information data on the service ID to be inputted through the inputting means 20 to the service providing apparatus 10.

The service ID may be transmitted from the service provider 150 through the modem 25 on the predetermined communication path, so that the transmitted service ID can be inputted through the inputting means 20 to the service providing apparatus 10. As described above, the service providing apparatus 10 can input the service ID from any forms of the information media each including the service IDs through the inputting means 20.

In the service providing apparatus 10, the inputting means 20 is operated to receive a predetermined linked signal multiplexed with a predetermined broadcasting program 103 to prepare the service ID corresponding to the received linked signal to automatically input the prepared service ID therethrough when the service ID is received. Accordingly, it is unnecessary for the user to enter the service ID to the service providing apparatus 10 through the input devices.

At this time, the procedure selection means 30 is operated to select the information processing programs corresponding to the automatically inputted service ID from a predetermined retrieval table. The procedure selection means 30 may be operated to select the information processing program by converting the inputted service ID into a predetermined program IDs. The executing means 40 is operated to execute the information processing program so as to follow the operation of the predetermined broadcasting program 103. This results in the fact that the timing of the execution of the information processing program can be closely synchronized with the operation of the broadcasting program 103 with ease in the service providing apparatus 10. It is therefore possible for the service provider 150 to save the trouble of producing the broadcasting program 103 so as to be closely followed by the execution of the appropriate information processing program.

The linked signal may include attendant information on a present scene in the broadcasting program 103. The linked signal may include a synchronous signal multiplexed with the broadcasting program 103 and synchronized with a present scene in the broadcasting program 103. For instance, the user may desire to record a broadcasting program on video. The service providing apparatus 10 is operated to execute the information processing program to record the desired broadcasting program on video in response to the linked signal. The service providing apparatus 10 thus constructed can real-timely provide the user with the service related to the present scene in the broadcasting program 103 on the basis of the attendant information on the present scene in the broadcasting program 103. Furthermore, the service providing apparatus 10 can obtain the provided desired service as the occasion demands.

The service providing apparatus 10 may further comprises a time control unit (not shown) for controlling an execution time of the procedure selection means 30 and the executing means 40 so that an operation time needed to start executing the information processing program after receiving the linked signal is limited to a predetermined limit time. The time control unit may be realized by executing a program. The service providing apparatus 10 thus constructed can improve its performance of the execution of the information processing program in response to the linked signal while the service providing apparatus 10 combines various information processing programs with each other in various manner.

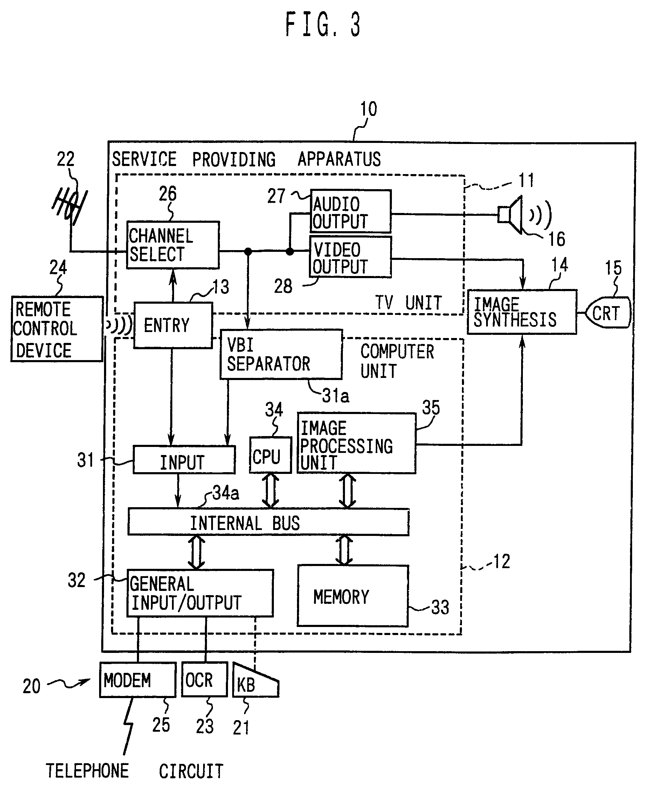

Referring to FIG. 3 of the drawings, there is best shown the concrete configuration of the terminal of the service providing system including the service providing apparatus 10 shown in FIG. 2. The service providing apparatus 10 comprises a television unit 11, a computer unit 12, a control signal inputting unit 13, an image synthesis unit 14, a display unit 15 and a speaker 16 and is associated with the input devices including the keyboard 21, the antenna 22, the OCR 23, a remote control device 24 and the modem 25.

In this embodiment, the service providing apparatus 10 is operated to receive a broadcasting signal from the broadcasting station of the broadcasting service information source 70 to the television unit 11 through the antenna 22 and further operated to input and output data from and to the server machine through the modem 25.

In this embodiment, the service providing apparatus 10 is capable of receiving a broadcasting signal on broadcasting waves including a VBI (Vertical Blanking Interval) signal as well as the television broadcasting signal. The VBI signal is transmitted on a VBI which is unused for broadcasting in the broadcasting waves but usable for transmitting various digital data including the VBI signal. The VBI signal serves as the aforesaid liked signal including information on the service ID, therefore, the service providing apparatus 10 can receive the service ID included in the VBI signal multiplied with the television broadcasting signal.

The television unit 11 is designed to receive the broadcasting signal from the broadcasting station of the broadcasting service information sources 70 through the antenna 22. The television unit 11 is further designed to produce an audio output and a visual output from the received broadcasting signal. The television unit 11 may be, but not limited to, a general television set. The computer unit 12 is designed to receive the service ID through the keyboard 21, the OCR 23 and the modem 25 to produce an image of the service information table on the basis of the received service ID.

The control signal inputting unit 13 is designed to receive a control signal from the remote control device 24. The control signal inputting unit 13 is electrically connected to the television unit 11 and the computer unit 12 and designed to divide the received control signal between the television unit 11 and the computer unit 12 according to a kind of the control signal.

The remote control device 24 is designed to allow the user to request the service providing apparatus 10 to perform predetermined processes. The remote control device 24 is operated to send the control signal indicating the user's request to the service providing apparatus 10 through a radio communication, such as an infrared data communication. The user's request may be a power on-off request for requesting the service providing apparatus 10 to turn its power on or off, a channel select request for requesting the channel select unit 26 to change to a desired channel, a volume control request for requesting an audio controller (not shown) to have its volume raised or lowered, and the other requests for requesting the service providing apparatus 10 to perform various functions which will be described later.

The image synthesis unit 14 is electrically connected to the television unit 11 and the computer unit 12 and designed to synthesize the visual output produced by the television unit 11 with the image produced by the computer unit 12 to produce a synthesis image.

The display unit 15 is electrically connected to the image synthesis unit 14 and designed to display the synthesis image produced by the image synthesis unit 14 on its screen. The speaker 16 is electrically connected to the television unit 11 and designed to output a sound in accordance with the audio output.

More specifically, the television unit 11 has a channel select unit 26, an audio output unit 27 and a video output unit 28. The channel select unit 26 is electrically connected to the antenna 22 and the control signal inputting unit 13. The channel select unit 26 is designed to select a channel corresponding to the specified channel from among the channels of the signal received through the antenna 22 according to the control signal for the channel select request which is inputted from the remote control device 24 through the control signal inputting unit 13.

The audio output unit 27 is electrically connected to the channel select unit 26. The audio output unit 27 is designed to input the selected broadcasting signal from the channel select unit 26 and produce an audio output to have the speaker 16 output a sound. The video output unit 28 is also electrically connected to the channel select unit 26. The video output unit 28 is designed to input the selected broadcasting signal from the channel select unit 26 and produce an video output to be transmitted to the image synthesis unit 14.

The computer unit 12 has a VBI separator 31a, an inputting unit 31, a general input-output unit 32, a storage device (hereinlater referred to simply as "memory") 33, a CPU (Central Processing Unit) 34 and an image processing unit 35. The CPU 34 is electrically connected with the inputting unit 31, the general input-output unit 32, the memory 33, and the image processing unit 35 through an internal bus 34a.

The VBI separator 31a is electrically connected to the channel select unit 26 and designed to separate the VBI signal on the VBI from the broadcasting signal selected by the channel select unit 26.

The inputting unit 31 is electrically connected to the control signal inputting unit 13 and the VBI separator 31a. The inputting unit 31 is designed to automatically input the control signal and the separated VBI signal including the service ID from the control signal inputting unit 13 and the VBI separator 31a, respectively.

The general input-output unit 32 is electrically coupled with various general peripheral input devices including the keyboard 21, the mouse (not shown), the optical character reader (OCR) 23, the modem 25 and so forth. The general input-output unit 32 is designed to input and output data from and to the input devices and the computer unit 12 therethrough.

The memory 33 comprises a ROM (Read Only Memory) storing therein at least a predetermined control program for controlling the service providing apparatus 10 and a RAM (Random Access Memory) serving as a work area for the CPU 34. The CPU 34 is operated to execute the control program to operate the service providing apparatus 10. The memory 33 may be constructed by a quick access storage device.

The image processing unit 35 is designed to produce an image under the control of the CPU 34 by executing the information processing program. The produced image is transmitted to the image synthesis unit 14. Then, the image synthesis unit 14 synthesizes the image produced by the audio producing unit 28 of the television unit 10 with the image produced by the image processing unit 35 of the computer unit 12. The synthesized image is displayed on the screen of the displaying unit 15.

The computer unit 12 may comprise an audio output unit (not shown) electrically connected to the CPU 34 through the internal bus 34a and connected to the speaker 16. The audio output unit of the computer unit 12 is adapted to produce an audio output to have the speaker 16 output a sound under the control of the CPU 34 by executing the information processing program. In this case, the information processing program is capable of produce the audio output.

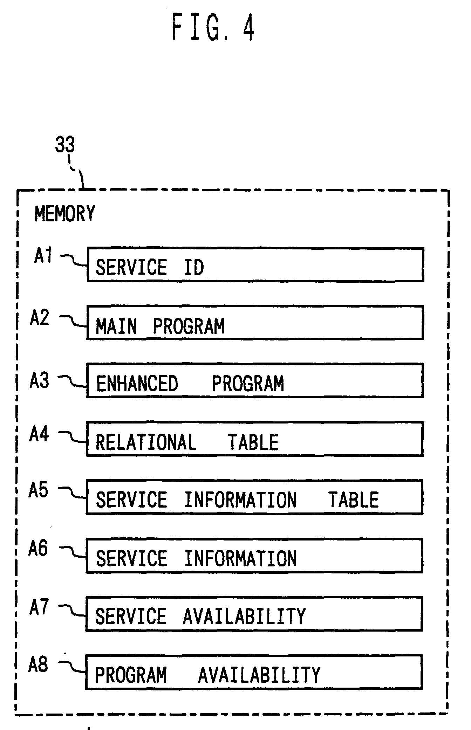

Referring to FIG. 4 of the drawings, there is shown a example of a memory map of the memory 33 of the service providing apparatus 10 shown in FIG. 3. The memory 33 has a service ID storage area A1, a main program storage area A2, an enhanced program storage area A3, a relational table storage area A4, a service information table storage area A5, a service information storage area A6, a service availability storage area A7 and a program availability storage area A8.

The service ID storage area A1 of the memory 33 is capable of storing therein a service ID list having the inputted service IDs listed. The main program storage area A2 is capable of storing the control program and the information processing program for the prime function 40b. The enhanced program storage area A3 is capable of storing the information processing program for the enhanced function 40a. The relational table storage area A4 is capable of storing therein a predetermined relational table between the service ID and the program ID. As described above, each of the service IDs corresponds to at least one of the program IDs. The relational table may be provided by the service database 110 of the service provider 150 and utilized for converting the service ID into the program IDs appropriate to the service specified by the service ID. The service information table storage area A5 is capable of storing therein the aforesaid service information table.

The service information storage area A6 is capable of storing therein the service information from the information providing sources 50 of the service provider 150. The service information may be stored in a predetermined external storage device (not shown) associated with a drive unit (not shown) and electrically connected to the service providing apparatus 10. The service availability storage area A7 is capable of storing therein a service availability information. The service availability information is indicative of availability of said service ID. The service availability information is provided by the identifier database 110 of the service provider 150 and utilized for judging whether the service ID inputted through said inputting means 20 is available or not. The service availability information may be indicative of a term of validity of the service ID, a version number of the service ID and so on.

The program availability storage area A8 is capable of storing therein a program availability information. The program availability information is provided by the identifier database 110 of the service provider 150 and utilized for judging whether one of the information processing program and its program ID should be update or not. The program availability information may be indicative of a version number of the information processing program or its program ID.

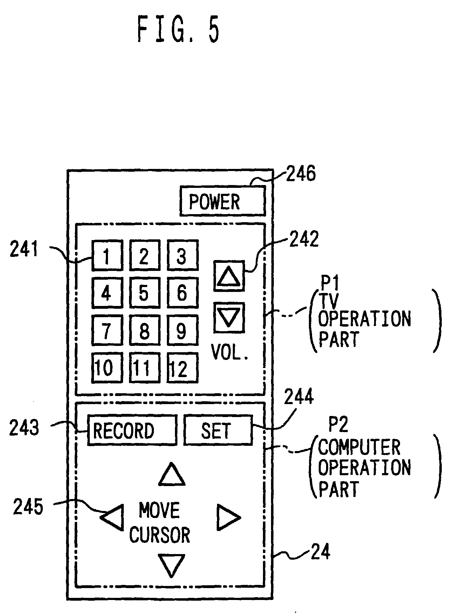

Referring to FIG. 5 of the drawings, there is shown an example of the remote control device 24 in the first embodiment of the service providing apparatus 10. The remote control device 24 has a television operation part P1 and a computer operation part P2.

In television operation part P1, the remote control device 24 has, but not limited to, a plurality (in this embodiment, twelve) of channel select buttons 241 for selecting a channel and a pair of volume regulation buttons 242 for regulating a volume of the sound outputted from the speaker 16. When the user select one of these buttons 241 and 242 in the television part P1 to be operated, the remote control device 24 is operated to radiate a radio wave including the control signal corresponding to the selected button toward the service providing apparatus 10.

In the computer operation part P2, the remote control device 24 has a record button 243, a set button 244 and a plurality (in this embodiment, four) of cursor move buttons 245. The record button 243 is designed to instruct the service providing apparatus 10 to record, on the memory 33, the service ID which is inputted through the inputting means 20. The set button 244 is designed to allow the user to select the function and request the service providing apparatus 10 to perform the selected function. The cursor move buttons 245 are designed to instruct the service providing apparatus 10 to move a cursor displayed on the screen of the display unit 15 toward a specified direction. When the user selects one of these buttons 243, 244 and 245 in the computer part P2 to be operated, the remote control unit 24 is also operated to radiate a radio wave including the control signal corresponding to the selected button toward the service providing apparatus 10. The radio wave is received by the control signal inputting unit 13 of the service providing apparatus 10.

For instance, before operating the cursor move buttons 245, the cursor is positioned at one of the icons displayed on the screen of the displaying unit 15. The icons are indicative of the functions in the service providing apparatus 10, respectively. When one of the cursor move buttons 245 of the remote control device 24 is selected by the user, the control signal is received from the remote control device 24 to the service providing apparatus 10 on a radio wave. The cursor is then shifted toward the specified direction corresponding to the selected cursor move button 245 in accordance with the received control signal.

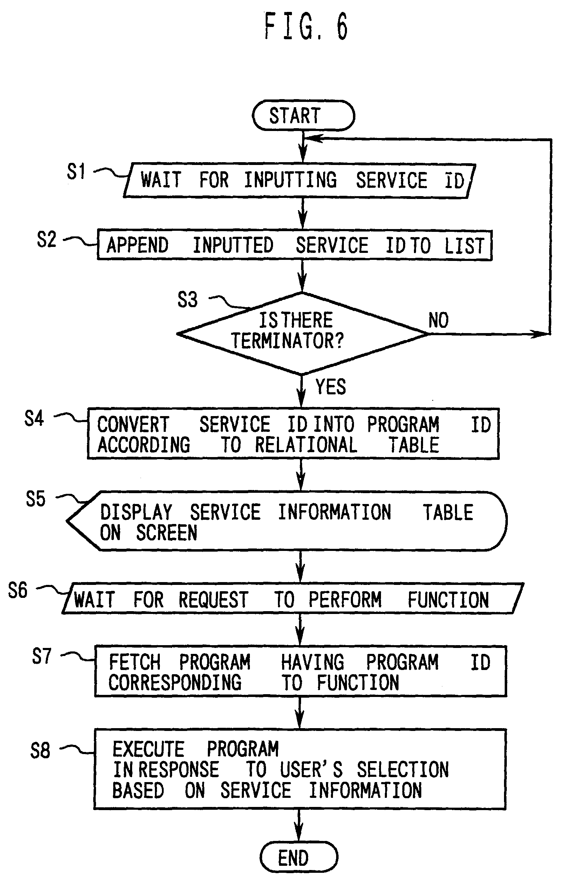

FIG. 6 is a flowchart showing the flow of a fundamental process of controlling the service providing apparatus 10. When the user requests to operate the service providing apparatus 10, the CPU 34 of the computer unit 12 is operated to execute a predetermined main program for selecting at least one of the information processing program appropriate to each of the inputted service IDs. The main program comprises steps S1 to S8 and is stored in the main program storage area A2 of the memory 33. The main program is activated to start at step S1.

In the step S1, the main program waits for inputting the service ID from the input devicesas such as the keyboard 21, the antenna 22, the OCR 23, the remote control device 24, the modem 25 and the like. At this time, for example, the user enters the service ID into the information processing apparatus 10 through the keyboard 21. Then, the entered service ID is inputted to the CPU 34 through the general input/output unit 32 and the internal bus 34a. When the service ID is received by the CPU 34, the control is passed from the step S1 to the step S2 in which the inputted service ID is appended to the service ID list and stored in the service ID storage area A1 of the memory 33. In the step S2, the judgement may be made upon whether it is necessary to append the inputted service ID to the service ID list or not. When it is necessary to append the inputted service ID to the service ID list, i.e., the inputted service ID is excluded from the service ID list, the inputted service ID is appended to the service ID list. When it is unnecessary to append the inputted service ID to the service ID list, the process in the step S2 is bypassed.

In the following step S3, the judgment is made upon whether there is a terminator detected or not. In this embodiment, the judgment is made upon whether the user operates the set button 244 of the remote control device 24 or not while a predetermined time on the basis of the control signal transmitted from the remote control device 24. In other words, the judgment is made in the step S3 upon whether the control signal of the set button 244 is received from the remote control device 24 or not. When the inputting operation is terminated, i.e., the control signal of the set button 244 is received from the remote control device 24, the answer in the step S3 is affirmative "YES". Then the control is passed from the step S3 to the step S4. When there is no terminator detected, i.e., the control signal of the set button 244 is not received from the remote control device 24 after the predetermined time past. In this case, the control is then returned from the step S3 to the step S1.

As described above, when the service ID is entered by the user through the remote control device 24, the judgment made upon whether there is a terminator detected or not. The judgment may be made in the step S3 on the basis of the other terminators than the above control signal of the set button 244. These terminators may be previously determined by a kind of media, a kind of the terminals or the like. The terminators may be previously determined by the server machine.

For instance, when the service ID is transmitted from the service provider 150 and then inputted through the modem 25, the above judgment may be made on the basis of the existence of a predetermined terminator also transmitted from the service provider 150. When the service ID is transmitted from the broadcasting station of the broadcasting service information source 70 on the broadcasting wave signal and inputted through the antenna 22, the information processing program included in the received signal may instruct the service providing apparatus 10 to terminate the process of inputting the service ID.

In the step S4, each of the inputted service IDs is converted into the program IDs appropriate to each of the inputted service IDs on the basis of the relational table stored in the relational table storage area A4 of the memory 33. Then, the service information table is created ad stored in the service information table storage area A5 of the memory 33. In the following step S5, the display unit 15 is operated to display the service information table on a table screen D1 as shown in FIG. 2. The table screen D1 shows a service ID, title of the service corresponding to the service ID, a term of validity of the service, and candidate functions corresponding to the information processing programs, so that the user can select a desired function from the candidate functions displayed on the table screen D1.

In this embodiment, the table screen D1 has icons indicative of the candidate functions corresponding to the information processing programs. When the user operates the icon indicative of the desired service and function, the CPU 34 is operated to execute the information processing program corresponding to the selected icon to perform the desired function as described below.

The control is passed from the step S5 to the step S6 in which the main program then waits for inputting the request for specifying the desired function to be performed.

When the user requests the service providing apparatus 10 to perform the specified function, i.e., when the request is detected by the main program, the control is passed from the step S6 to the step S7. In the step S7, the CPU 34 is operated to fetch the information processing program which has the program ID corresponding to the specified function. The main program is further operated to retrieve the service information corresponding to the specified service and function and to request the information providing source 50 or the broadcasting service information providing source 70 of the service provider 150 to send the retrieved service information. The control is then passed from the step S7 to the step S8 in which the CPU 34 is operated to execute the fetched information processing program in response to the user's request on the basis of the retrieved service information. When the CPU 34 is operated to execute the fetched information processing program, the CPU 34 may be operated to access the service providing source 60 and the broadcasting service information providing source 70 of the service provider 150 to perform the desired function, for example, the subscribing and reservation function or the charge settlement function 43.

When the CPU 34 completely performs the information processing program corresponding to the specified function, the control may be returned from the step S8 to the step S6 in which the main program is operated to wait for the other user's request.

The executions of the information processing programs performed in the steps S6 to S8 may be sequentially performed in accordance with a predetermined procedure having instructions for executing at least one of the information processing programs. The predetermined procedure may be previously determined by the user or the service provider 150.

In the aforesaid step S5, the judgment may be made upon whether the service ID is available or not according to the service availability information, such as the term of its validity, stored in the service availability storage area A7 in the memory 33. When the judgment is made that the service ID is unavailable, the service providing apparatus 10 may be operated to inform the user of the judgment result. Moreover, in the step S5, the judgment may be further made upon whether the inputted service ID is included in the relational table stored in the relational table storage area A4 of the memory 33 or not. When the judgment is made that the inputted service ID is excluded from the relational table, the service providing apparatus 10 may be operated to request the identifier database 110 of the service provider 150 to send the relational table including information on the absent service ID. Then, the service providing apparatus 10 may be operated to replace the sent relational table with the existing relational table stored in the relational table storage area A4 in the memory 33.

In the aforesaid step S6, the judgment may be made upon the term of validity of the information processing program and the program ID on the basis of version information on the information processing program and/or the program ID. If the information processing program and/or the program ID is invalid, the service providing apparatus 10 may be operated to update the information processing program and/or the program ID. Moreover, when the information processing program corresponding to the selected function is excluded from the program storage areas A2 and A3 of the memory 33 of the service providing apparatus 10, the service providing apparatus 10 may be operated to request the program database 120 of the service provider 150 to send the information processing program. The executing means 40 therefore becomes capable of implementing the additional procedures. This means that the service providing apparatus 10 can perform the necessary information processing program opportunely.

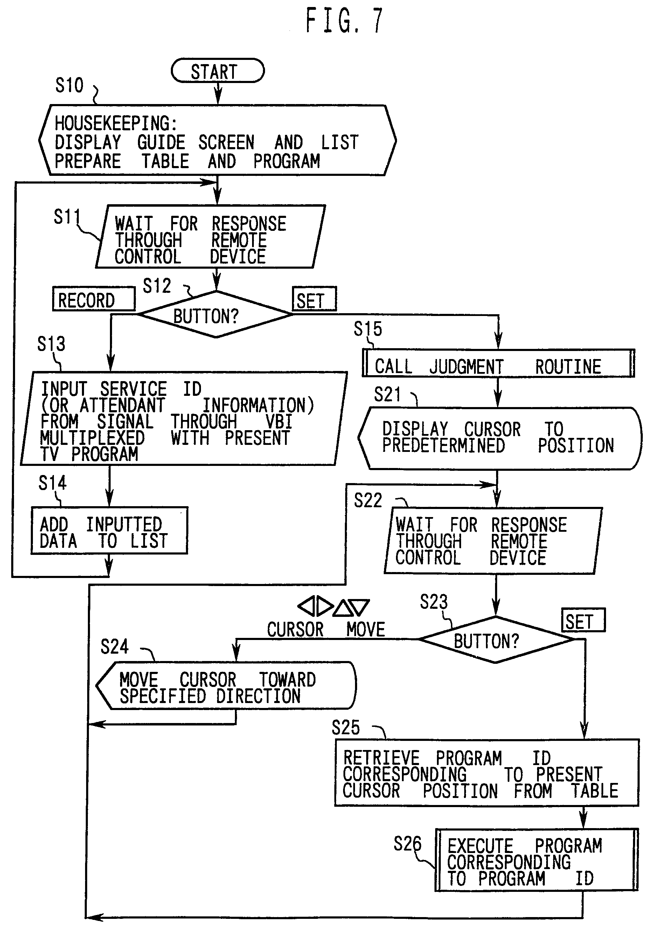

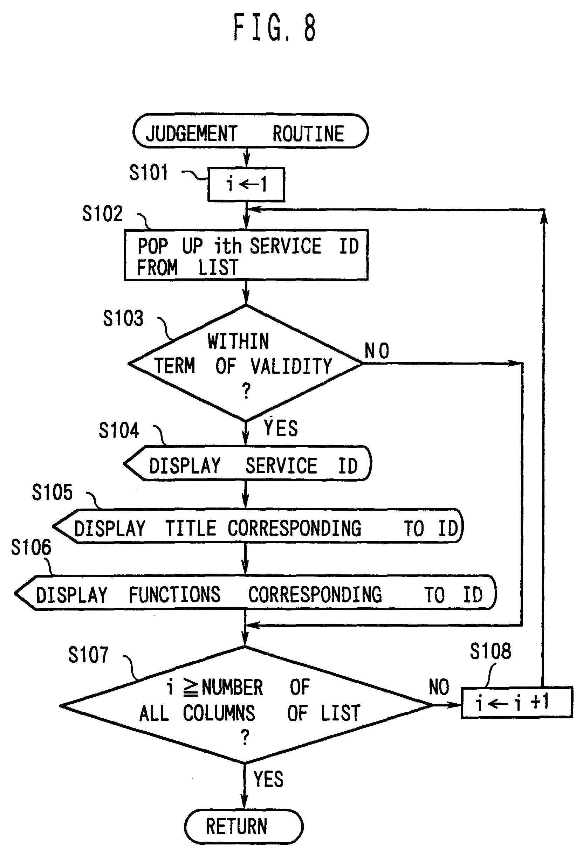

The operation of the service providing apparatus 10 shown in FIG. 2 by using the remote control device 24 will be described hereinlater with reference to FIGS. 7 and 8 of the drawings.

The CPU 34 of the computer unit 12 executes the main program shown in FIG. 6 to operate the service providing apparatus 10 through a process comprising steps S10 to S26 as shown in FIG. 7. The user prepares the information media including information on a diversity of services each associated with its service ID, so that the user can select the service ID corresponding to the desired service from the information media. For instance, the user finds an interested broadcasting program according to the newspaper. The user then watches this interested broadcasting program. At this time, the service ID is provided for the user on the VBI signal of the broadcasting signal associated with the broadcasting program, and accordingly inputted to the service providing apparatus 10 through the antenna 22.

The service providing apparatus 10 starts to perform the housekeeping by displaying a guide screen on the display unit 15, clearing the service ID list stored in the service ID list storage area A1 of the memory 33, preparing the relational table and predetermined information processing programs readably in the step S10.

In the following step S11, the main program is operated to wait for receiving the control signal from the remote control device 24. When the control signal is received from the remote control device 24, the control is passed from the step S11 to the step S12 in which the judgment is made upon which of the buttons of the remote control device 24 is operated by the user on the basis of a kind of the control signal received through the control signal inputting unit 13. When the judgment is made in the step S12 that the record button 243 of the remote control device 24 is operated, the control is passed from the step S12 to the step S13. When the judgment is made in the step S12 that the set button 244 of the remote control device 24 is operated, the control is passed from the step S12 to the step S15.

In the step S13, the main program is operated to input the service ID through the input devices, for example, the keyboard 21 and the antenna 22. When the service ID is inputted through the keyboard 21, the inputted service ID is transmitted to the CPU 34 through the general input/output unit 32 and the internal bus 34a. When the service ID is inputted through the antenna 22 on the broadcasting wave, the inputted broadcasting wave is transmitted as the VBI signal to the VBI separator 31a through the channel select unit 26. The VBI separator 31a is operated to separate the service ID from the VBI signal. Then, the service ID is transmitted to the CPU 34 through the inputting unit 31 and the internal bus 34a.

Furthermore, the VBI separator 31a may be operated to separate an attendant property information accompanying said service ID. The attendant property information may includes a term of validity of the service ID, a version of the information processing program, a location of the service information corresponding to the service ID and so forth. The attendant property information may be utilized for selecting the procedure appropriate to the desired service, so that the selection of the more preferably procedure can be rapidly performed.

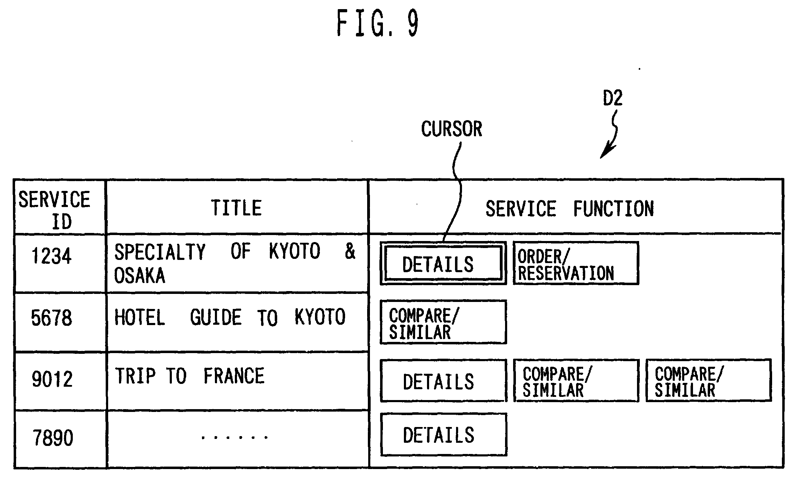

The control is passed from the step S13 to the step S14 in which the service ID is appended to the service ID list stored in the service ID list storage area A1 of the memory 33. Then, the control is returned from the step S14 to the step S11. The steps S11 to S14 are repeated until the user operates the set button 244 of the remote control device 24. When the user operates the set button 244 of the remote control device 24, the judgment is made in the step S12 that the control signal of the set button 244 is received. The control is then passed from the step S12 to the step S15 in which the main program calls a judgment routine in which the judgment is made upon whether the service ID is valid or not. The judgment routine will be described in detail later. Then, the service information table is displayed on a table screen D2 shown in FIG. 9. The table screen D2 will be also described later.

When the control is returned from the judgment routine to the step S15, the control is passed from the step S15 to the step S21 in which the cursor is positioned at a predetermined location and displayed on the table screen of the display unit 15. In the following step S22, the main program is operated to wait for inputting the control signal through the remote control device 24. When the control signal is inputted from the remote control device 24 through the control signal inputting unit 13, the control is passed from the step S22 to the step S23 in which the judgment is made upon which of the buttons of the remote control device 24 is operated on the basis of a kind of the control signal.

When the judgment is made in the step S23 that the cursor move buttons 245 of the remote control device 24 is operated by the user, the control is passed from the step S23 to the step S24. When, on the other hand, the judgment is made in the step S23 that the user operates the set button 244 of the remote control device 24, the control is passed from the step S23 to the step S25. In the step S24, the cursor is shifted toward the direction corresponding to the operated button. The control is then returned from the step S24 to the step S22. In the step S25, the main program is operated to fetch the program ID corresponding to the function on which the cursor is presently located from the service information table. The control then is passed from the step S25 to the step S26 in which the CPU 34 is operated to execute the information processing program corresponding to the fetched program ID to perform the desired function. The control is then returned from the step S26 to the step S22. The execution of the information processing program in the step S26 may comprise availability judging step of judging whether the information processing program and/or the program ID is available or not according to the program availability information stored in the program availability storage area A8 in the memory 33. When the judgment is made that the information processing program and/or the program ID is unavailable, the service providing apparatus 10 may request the identifier database 110 and/or the program database 120 to transmit an available information processing program and/or program ID. Therefore, the information processing program and/or the program ID can be updated.

This results in the fact that the service providing apparatus 10 can usually obtain the latest information processing program to perform the latest function from the program database 120 of the service provider 150.

FIG. 8 is a flowchart showing the flow of the judgment routine shown in FIG. 7. The judgment routine comprises steps S101 to S108. In the step S101, a loop counter **i**, which is utilized for the loop control, is initialized, i.e., the value of the loop counter **i** is set to "1". In the following step S102, the service ID stored in the **i**th column of the service ID list is popped up from the service ID list. In the step S103, the judgment is made whether the **i**th service ID has a term available or not according to the aforesaid service availability information stored in the service availability storage area A7 in the memory 33. When the term of the **i**th service ID is available, the answer in the step S103 is affirmative "YES". Then, the control is passed from the step S103 to the step S104. When the term of the **i**th service ID is invalid, the answer in the step S103 is negative "NO". Then, the control is passed from the step S103 to the step S107 in order to avoid displaying the information on tins service ID. At this time, the service providing apparatus 10 may be operated to inform the user of the judgment result. In the steps S104 to S106, the information on the service ID is displayed on a table screen D1 of the displaying unit 15 in accordance with the service information table. The table screen is shown in FIG. 9.

The information on the service ID includes a title of the service specified by the service ID and a candidate function appropriate to the specified service. More specifically, in the step S104, the **i**th service ID is displayed on the table screen D1 of the displaying unit 15. In the step S105, the title of the service corresponding to the **i**th service ID is displayed on the table screen D1 of the displaying unit 15. In the step S106, the candidate functions are displayed on the table screen D1 of the displaying unit 15.

In the step S107, the judgment is made whether the value of the loop counter **i** exceeds the number of all columns of the service ID list or not. When the value of the loop counter **i** exceeds the number of all columns of the service ID list, the answer in the step S107 is affirmative "YES". The control is then returned from the judgment routine to the original routine which calls this judgment routine. When the value of the loop counter **i** is less than the number of all columns of the service ID list, the answer in the step S107 is negative "NO". Then, the control is passed from step S107 to the step S108 in which the value of the loop counter **i** is incremented. The control is then returned from the step S108 to the step S102. The steps S102 to S108 are thus repeated until the value of the loop counter **i** exceeds the number of all of columns in the service ID list.

As shown in FIG. 9, each of predetermined functions 40a and 40b is represented by a predetermined icon in the service information table displayed on the table screen D2 of the displaying unit 15. This service information table includes the service ID, the title of the service specified by the service ID, and the candidate functions appropriate to the service ID. The candidate functions are indicated by a plurality of icons corresponding to the information processing programs. The user can easy recognize a diversity of functions appropriate to the specified service according to the icons in the service information table. The user can therefore interactively select a desired function from the service information table by selecting a corresponding icon from the table screen D2. The executing means 40 is, therefore, operated to execute the information processing program corresponding to the desired function in accordance with the user's selection of the icon to perform the desired function. The user's selection may be performed by clicking the icon. This simple operation is enough to enable to specify the procedure appropriate to the service.

As shown in FIG. 9, the table screen D2 has a variety of icons, for instance, a "DETAILS" icon, "ORDER/RESERVATION" icon and a "COMPARE/SIMILAR" icon. The "DETAILS" icon may be indicative of the information search function 41. When the user select the "DETAILS" icon from the service information table displayed on the table screen D2 by moving the cursor to be located on this icon, the information search function 41 is performed by executing the information processing program corresponding to the information search function 41 in order to search the information source 120 of the service provider 150 to retrieve detailed service information on the service specified by the service ID.

The "ORDER/RESERVATION" icon may be indicative of the information processing program corresponding to the subscribing and reservation function. When the user operates the "ORDER/RESERVATION" icon, the subscribing and reservation function is performed by executing the information processing program. At this time, the service providing apparatus 10 is operated to access the service providing source 60 of the service provider 150.

The "COMPARE/SIMILAR" icon may be indicative of the information processing corresponding to the information search function 41 and a comparison function. At this time, the information search function 41 is performed in cooperation with the comparison function to search the information providing source 50 of the service provider 150 to retrieve, from the information providing source 50, the service information related another service similar to the specified service. Furthermore, the retrieved service information is compared with the service information on the specified service to obtain a result displayed on the screen of the displaying unit 15.

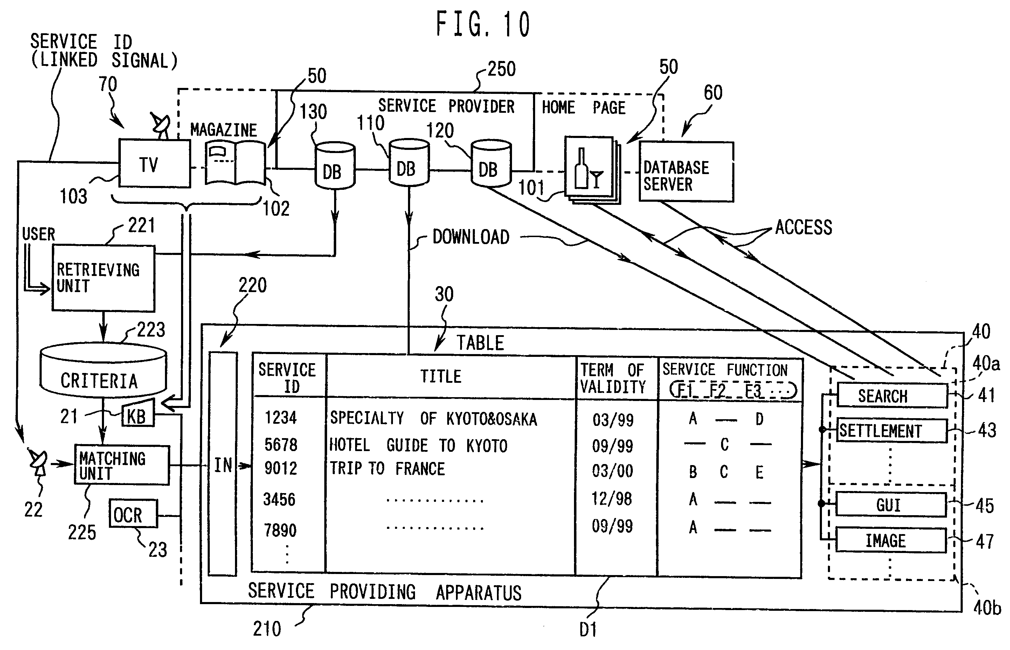

Referring to FIGS. 10 to 15 of the drawings, there is shown a second preferred embodiment of the service providing system according to the present invention.

The service providing system is adapted to systematically provide a user with a diversity of services each having a service ID. More particular, the second embodiment of the service providing system is operable to allow the user to previously determine a retrieval condition for retrieving the service ID matched with the retrieval condition. The service providing system can automatically provide the user with the service corresponding to the service ID matched with the retrieval condition predetermined by the user.

The service providing system comprises a service providing apparatus 210 and a service provider 250. The service providing apparatus 210 comprises inputting means 220 and the same constitutional elements including the procedure selection means 30 and the executing means 40 as those of the first embodiment of the service providing system. The service provider 250 comprises an identifier attribute information source 130 and the same sources as those of the service provider 150 of the first embodiment of the service providing system, i.e., the information providing source 50, the service providing source 60, the broadcasting service

information source 70, the identifier database 110 and the program database 120. As shown in FIG. 10, the inputting means 220 comprises a retrieving unit 221, a storage device 223 and a matching judgement unit 225. The retrieving unit 221 is electrically connected to the identifier attribute information source 130. The retrieving unit 221 is designed to store therein a predetermined retrieval condition previously determined by the user to decide which of the service IDs is monitored and which of the functions is performed. The retrieving unit 221 is further designed to determine a matching criterion utilized for judging whether the service ID is matched with the retrieval condition and the information processing program or not.

The retrieving unit 221 is operable to calculate the matching criterion on the basis of a predetermined expression and the service ID which will be received. The retrieving unit 221 may be operated to judge whether the matching criterion exceeds a predetermined matching level or not.

The storage device 223 is electrically connected to the retrieving unit 221 and capable of storing therein the matching criterion determined by the retrieving unit 221. When the retrieving unit 221 judges that the matching criterion exceeds the matching level, the retrieving unit 221 has the storage device 223 store the matching criterion therein. The retrieving unit 221 and the storage device 223 serve as a condition storing unit and a matching criterion determination unit as defined in claims.

The matching judgment unit 225 is electrically connected to the storage device 223 and capable of receiving a service ID from the service provider 250. The service ID may be included in a predetermined linked signal associated with a broadcasting signal transmitted from the broadcasting station. The predetermined linked signal may be associated with data transmitted from the information providing source 50. The matching judgment unit 225 is designed to judge whether the received service ID is matched with the matching criterion determined by the retrieving unit 221 or not. When the matching judgment unit 225 judges that the received service ID is matched with the matching criterion, only the matched service ID is inputted to the service providing apparatus 210 through the inputting means 220.

The inputting means 220 may be operated to receive a predetermined linked signal multiplexed with a predetermined broadcasting program 103 from the broadcasting service information source 70. Then, the inputting means 220 is operated to retrieve the service ID included in the linked signal and matched with the matching criterion to be automatically inputted therethrough to the service providing apparatus 210.

In the service providing apparatus 210, the procedure selection means 30 is operated to select the information processing program corresponding to the automatically inputted service ID on the basis of the retrieval condition. The executing means 40 is operable to execute the selected information processing program to perform the function under the retrieval condition.

The linked signal may include attendant information on a present scene in the broadcasting program 103. As a result, the service providing apparatus 210 can perform a predetermined function synchronously with the present scene in the broadcasting program 103. The linked signal may include a synchronous signal multiplexed with the broadcasting program 103 for providing information, accordingly, the service providing apparatus 210 can real-timely provide information on the present scene in the broadcasting program 103.

The service providing apparatus 210 may further comprises a time control unit (not shown) for controlling an execution time of the procedure selection means 30 and the executing means 40 so that an operation time needed to start executing the information processing program after receiving the linked signal is limited to a predetermined limit time. The time control unit may be performed by executing a program. The service providing apparatus 210 thus constructed can improve its performance of the execution of the information processing program in response to the linked signal while the service providing apparatus 210 combines various information processing programs with each other in various manner.

The retrieving unit 221 may receive the service ID and its attribute information both of which correspond to a new linked signal multiplexed with a predetermined broadcasting program 103 from a predetermined identifier attribute information source 130. The retrieving unit 221 can determine the matching criterion for judging whether the received new linked signal is matched with the retrieval condition and the information processing program or not.

The retrieving unit 221 may transmit the retrieval condition to a predetermined service provider 250 to request the service provider 250 to determine the matching criterion according to the transmitted retrieval condition. The retrieving unit 221 may receive the determined matching criterion from the service provider 250. Then, the retrieving unit 221 can judge whether the linked signal is matched with the received matching criterion or not.

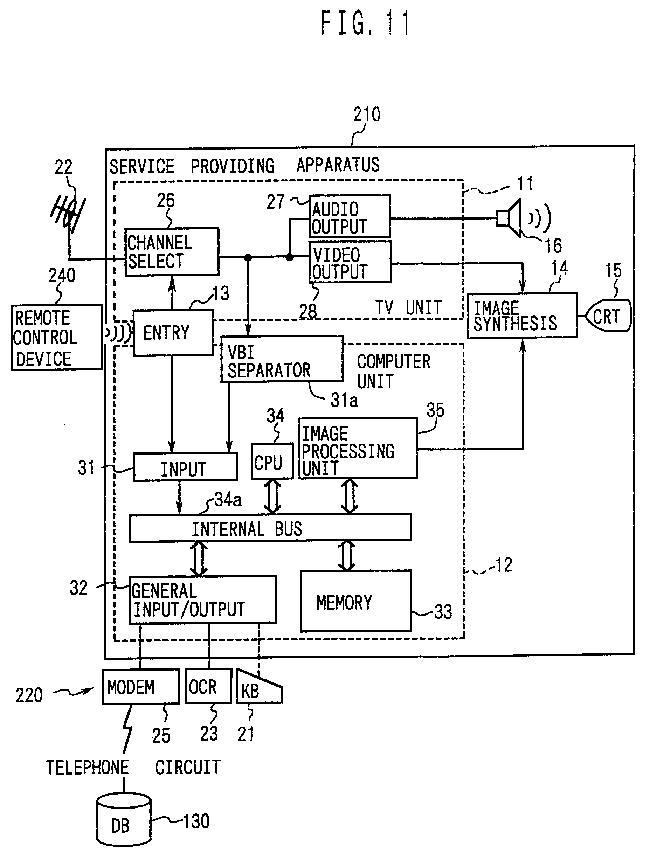

As shown in FIG. 11, the second embodiment of the service providing apparatus 210 has the same constitutional elements as those of the first embodiment of the service providing apparatus 10 shown in FIG. 2 except for the aforesaid inputting means 220 and a remote control unit 240. In the service providing apparatus 210, the memory 33 has a memory map shown in FIG. 11 and a main program to be executed by the CPU 34 as will be described later. The memory map and the main program are also different from those of the first embodiment of the service providing apparatus 10.

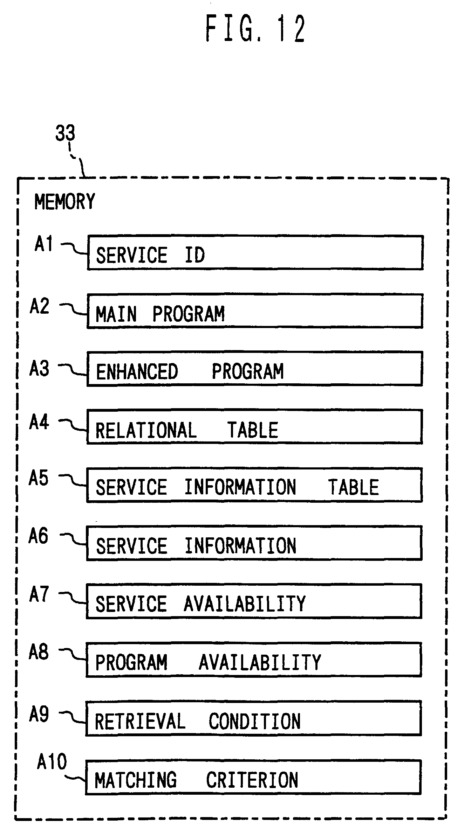

As shown in FIG. 12, the memory 33 has the same storage areas including the service ID storage area A1, the main program storage area A2, the enhanced program storage area A3, the relational table storage area A4, the service information table storage area A5, the service information storage area A6, the service availability storage area A7, the program availability storage area A8, as those of the first embodiment of the memory map shown in FIG. 4. The memory 33 shown in FIG. 12 further has a retrieval condition storage area A9 and a matching criterion storage area A10.

The program availability storage area A8 is capable of storing therein a program availability information. The program availability information is provided by the identifier database 110 of the service provider 250 and utilized for judging whether one of the information processing program and its program ID should be updated or not. The program availability information may be indicative of a version number of the information processing program or its program ID.

The retrieval condition storage area A9 is capable of storing therein the aforesaid retrieval condition. The matching criterion storage area A10 is capable of storing therein the aforesaid matching criterion.

The service providing apparatus 210 may further comprise identifying means (not shown) for conferring the previously inputted service identifier on the specified service information stored in the memory 33 to be identifiable. The memory 33 may store therein the information having the service identifier. The service providing apparatus 210 thus constructed can allow the user to confer a service ID to identify a desired service obtained from various electric media which is recorded therein the diverse services.

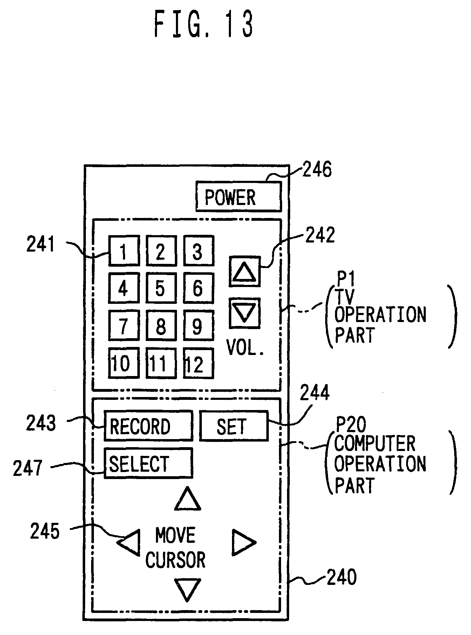

Referring to FIG. 13 of the drawings, there is shown an example of the remote control device 240 in the second embodiment of the service providing apparatus 210. The remote control device 240 has a television operation part P1 and a computer operation part P20.

In television operation part P1, the remote control device 240 has the same buttons 241 and 242 as those of the remote control device 24 shown in FIG. 5. In the computer operation part P20, the remote control device 240 has the same record button 243, set button 244 and four cursor move buttons 245 as those of the remote control device 24 shown in FIG. 5 except for a select button 247. The select button 247 is designed to allow the user to determine the retrieval condition. When the user operates the select button 247 of the remote control device 240, the control signal for the selection of the retrieval condition is transmitted to the service providing apparatus 210.

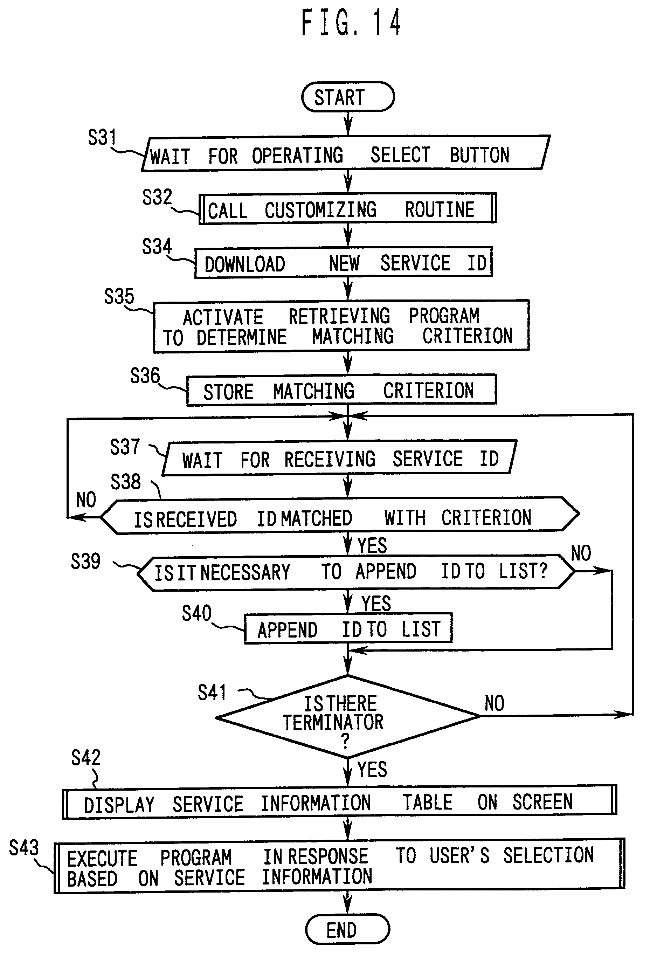

FIG. 14 is a flowchart showing the flow of a fundamental process of controlling the service providing apparatus 210. When the user requests the service providing apparatus 210 to start operating, the CPU 34 of the computer unit 12 is operated to execute a predetermined main program. The main program comprises steps S31 to S43 and is stored in the main program storage area A2 of the memory 33. The main program is activated to start at step S31.

In the step S31, the main program waits for receiving the control signal of the select button 247 from the remote control device 240. When the user operates the select button 247 of the remote control device 240, the control signal of the select button 247 is transmitted from the remote control device 240 to the service providing apparatus 210 through the control signal inputting unit 13. Then, the control is passed from the step S31 to the step S32. Here, the operation of the select button 247 means that the user intends to customize the procedure for performing the function in the service providing apparatus 210. At this time, the user may enter a taste in a desired service to the service providing apparatus 210 through the input devices.

In the step S32, a customizing routine is called. The customizing routine will be described later. When the customizing routine is terminated and the control is then returned from the customizing routine to step S32, accordingly, passed from the step S32 to the step S34 in which the service providing apparatus 210 is, if desired, operated to request the identifier information database 130 of the service provider 250 to send a new service ID and its attribute information. The new service ID is then downloaded from the identifier information database 130 of the service provider 250.

The control is then passed from the step S34 to the step S35 in which the retrieving program is activated to determine the matching criterion. In the retrieving program, the matching criterion may be determined according to the retrieval condition inputted by the user in the customizing routine. The step S35 then goes to the step S36 in which the determined matching criterion is stored in the matching criterion storage area A10 of the memory 33. The matching criterion may include only the service ID matched with the retrieval condition. The matching criterion may further include the attribute information of the matched service ID.

The step S36 goes to the step S37, in which the main routine waits for receiving the service ID. When the service ID is received in the step S37, the step S37 goes to the step S38 in which the judgment is made upon whether the received service ID is matched with the matching criterion or not. When the answer in the step S38 is affirmative "YES", the step S38 goes to the step S39. When the answer in the step S38 is negative "NO", the control is returned from the step S38 to the step S37.

In the step S39, the judgment is made upon whether it is necessary to append the inputted service ID included in the matching criterion to the service ID list or not. When the service ID is excluded from the service ID list stored in the service ID list storage area A1 of the memory 33, the answer in the step S39 is affirmative "YES". The step S39 then goes to the step S40 in which the inputted service ID is appended to the inputted service ID list and stored in the service ID list storage area A1 of the memory 33. The step S40 then goes to the step S41. When, on the other hand, the service ID has been included in the service ID list stored in the service ID list storage area A1 of the memory 33, the answer in the step S39 is negative "NO". The step S39 then goes to the step S41. In the step S41, the judgment is made upon whether there is a terminator or not. In this embodiment, the judgment is made upon whether the user operates the set button 244 of the remote control device 240 or not while a predetermined time on the basis of the control signal transmitted from the remote control device 240. In other words, the judgment is made in the step S41 upon whether the control signal of the set button 244 is received from the remote control device 240 or not. When the inputting operation is terminated, i.e., the control signal of the set button 244 is received from the remote control device 240, the answer in the step S41 is affirmative "YES". The control is then passed from the step S41 to the step S42. When there is no terminator detected, i.e., the control signal of the set button 244 is not received from the remote control device 240 after the predetermined time past. In this case, the control is then returned from the step S41 to the step S37.

As described above, when the service ID is entered by the user through the remote control device 240, the judgment is made upon whether there is a terminator detected or not. The judgment may be made in the step S41 on the basis of the other terminators than the above control signal of the set button 244. These terminators may be determined by a kind of media, a kind of the terminals or the like. The terminators may be determined by the server machine.

For instance, when the service ID is transmitted from the service provider 250 and then inputted through the modem 25, the above judgment may be made on the basis of the existence of a predetermined terminator also transmitted from the service provider 250. When the service ID is transmitted from the broadcasting station of the broadcasting service information source 70 on the broadcasting wave signal and inputted through the antenna 22, the information processing program included in the received signal may instruct the service providing apparatus 210 to terminate the process of inputting the service ID. When the answer in the step S41 is negative "NO", the control is returned from the step S41 to the step S37.

In the step S42, each of the service IDs stored in the service ID list storage area A1 of the memory 33 is converted into the program IDs appropriate to each of the inputted service IDs on the basis of the relational table stored in the relational table storage area A4 of the memory 33 and a desired procedure customized by the user in the customizing routine. The service information table is then created and stored in the service information table storage area A5 of the memory 33. At the same time, the display unit 15 is operated to display the service information table on the table screen D1 as shown in FIG. 10. The table screen D1 shows a service ID, title of the service corresponding to the service ID, a term of validity of the service, and candidate functions corresponding to the information processing programs. The user can therefore select a service and a procedure appropriate to the service from the service information table displayed on the table screen D1.

In the step S42, the service providing apparatus 210 is operated to wait for user's selection. In response to the use's selection, the step S42 goes to the step S43 in which the CPU 34 is operated to fetch the selected information processing program from the program storage areas A2 and A3 of the memory 33. The main program is operated to retrieve the service information corresponding to the specified service and function according to the service table and to request the information providing source 50 of the service provider 250 to send the retrieved service information. The CPU 34 is operated to execute the fetched information processing program on the basis of the retrieved service information. When the CPU 34 completely performs the information processing program, the main program may be terminated or may be returned from the step S43 to the step S37 in which the main program is operated to wait for receiving the other service ID included in the linked signal.

At this time, the user may previously determine at least a procedure appropriate to the specific service ID from among the service information table displayed on the table screen D1. Then the service providing apparatus 210 may be operated to wait for the user's selection. In response to the user's selection, the predetermined procedure may be performed by the service providing apparatus 210. Alternatively, the service providing apparatus 210 may automatically determine procedures appropriate to all of the service IDs from the service information table stored in the memory 33. In this case, the service providing apparatus 210 may be operated to wait for inputting any one of the service IDs stored in the service information table.

In the aforesaid step S35, the judgment may be made upon the term of validity of the service ID. Moreover, in the step S35, the judgment may be made upon whether the inputted service ID is included in the relational table or not. When the judgment is made that the inputted service ID is excluded from the relational table, the service providing apparatus 210 may be operated to request the identifier database 110 of the service provider 250 to send the information on the program IDs appropriate to the service ID. Then, the service providing apparatus 210 may be operated to append the information on the program IDs appropriate to the service ID to the relational table stored in the relational table storage area A4 of the memory 33.

In the aforesaid step S42, the judgment may be made upon the term of validity of the information processing program and the program ID on the basis of version information on the information processing program and/or the program ID. If the information processing program and/or the program ID is invalid, the service providing apparatus 210 may be operated to update the information processing program and/or the program ID. Moreover, when the information processing program corresponding to the selected function is excluded from the service providing apparatus 210, the service providing apparatus 210 may be operated to request the program database 120 of the service provider 250 to send the information processing program.

The service providing apparatus 210 thus constructed can be operated to automatically input the service ID which is matched with the predetermined retrieval condition. The service providing apparatus 210 can be then operated to select the program IDs appropriate to the inputted service ID to display the service information table on the table screen D1 of the displaying unit 15. The user can select a desired service from the service information table to perform the desired function by executing the information processing program.

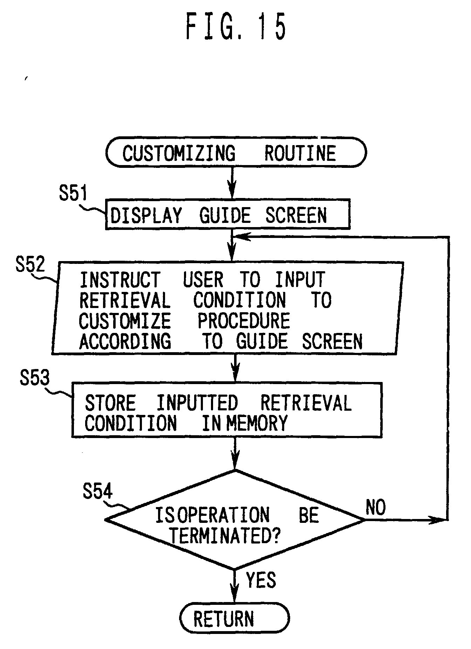

Referring to FIG. 15 of the drawings, there is shown the customizing routine which comprises steps S51 to S54 and is called by the main program at the step S32. When the control is passed from the main program, the customizing routine starts at the step S51.

In the step S51, the display unit 15 is operated to display a guide menu on a guide screen, so that the user can interactively operate the service providing apparatus 210. In the step S52, the customizing routine is operated to instruct the user to input a desired retrieval condition, such as a taste in a desired service, according to the guide menu displayed on the guide screen of the display unit 15. The customizing routine may be operated to instruct the user to input a desired procedure for the desired retrieval condition. For instance, when the user want to record, on videotape, broadcasting programs 103 in which some one of musicians performs, the user inputs the name of the musician and the recording function.

When the operation of inputting the retrieval condition is completed, the step S52 goes to the step S53 in which the inputted retrieval condition is stored in the retrieval condition storage area A9 of the memory 33. The step S53 then goes to the step S54 in which the judgment is made upon whether the operation of customizing routine is completed or not. When the answer in the step S54 is affirmative "YES", the customizing routine is ended and the control is returned to the main program. When the answer in the step S54 is negative "NO", the control is returned from the step S54 to the step S52.

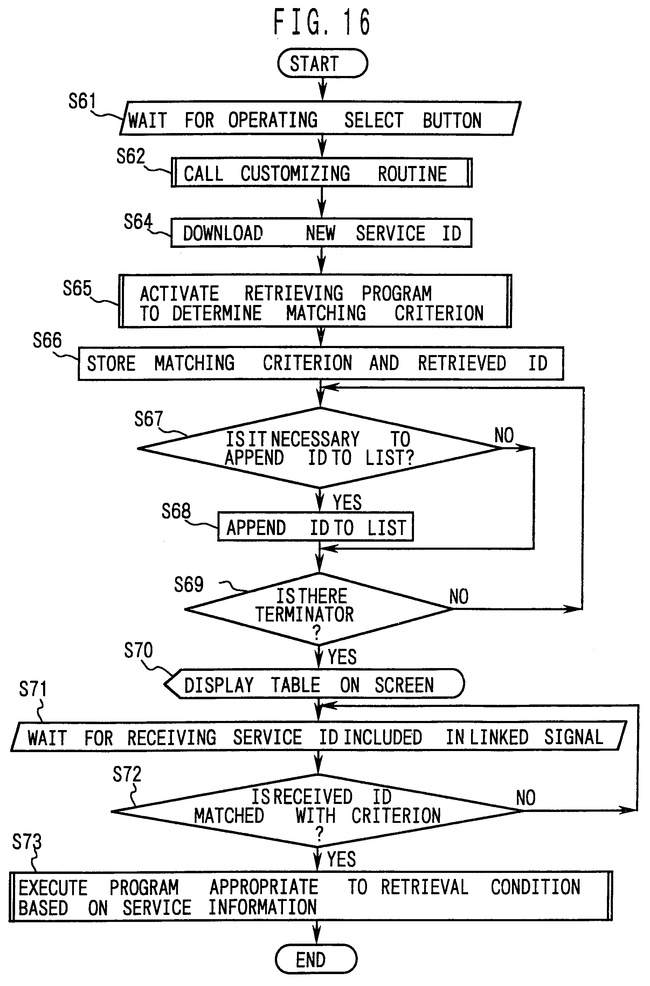

FIG. 16 is a flowchart showing the flow of another fundamental process of controlling the service providing apparatus 210. When the user requests the service providing apparatus 210 to start operating, the CPU 34 of the computer unit 12 is operated to execute a predetermined main program. As shown in FIG. 16, the main program comprises steps S61 to S73 and is stored in the main program storage area A2 of the memory 33. The main program is activated to start at step S61.

In the step S61, the main program waits for receiving the control signal of the select button 247 from the remote control device 240. When the user operates the select button 247 of the remote control device 240, the control signal of the select button 247 is transmitted from the remote control device 240 to the service providing apparatus 210 through the control signal inputting unit 13. Then, the control is passed from the step S61 to the step S62. Here, the operation of the select button 247 means that the user intends to customize the procedure for performing the function in the service providing apparatus 210. At this time, the user may enter a taste in a desired service to the service providing apparatus 210 through the input devices.

In the step S62, a customizing routine is called. The customizing routine is the same as the aforesaid customizing routine shown in FIG. 15. When the customizing routine is terminated, the control is then returned from the customizing routine to step S62, accordingly, passed from the step S62 to the step S64. In the step S64, the service providing apparatus 210 is, if desired, operated to request the identifier information database 130 of the service provider 250 to send a new service ID and its attribute information. The new service ID is then downloaded from the identifier information database 130 of the service provider 250.

The control is then passed from the step S64 to the step S65 in which the retrieving program is activated to determine the matching criterion. In the retrieving program, the matching criterion may be determined according to the retrieval condition inputted by the user in the customizing routine. The step S65 then goes to the step S66 in which the determined matching criterion is stored in the matching criterion storage area A10 of the memory 33. The matching criterion may include only the service ID matched with the retrieval condition. The matching criterion may further include the attribute information of the matched service ID.

The step S66 goes to the step S67 in which the judgment is made upon whether it is necessary to append the inputted service ID included in the matching criterion to the service ID list or not. When the service ID is excluded from the service ID list stored in the service ID list storage area A1 of the memory 33, the answer in the step S67 is negative "NO". The step S67 then goes to the step S69. When, on the other hand, the service ID has been included in the service ID list stored in the service ID list storage area A1 of the memory 33, the answer in the step S67 is affirmative "YES". The step S67 then goes to the step S68 in which the inputted service ID is appended to the inputted service ID list and stored in the service ID list storage area A1 of the memory 33. The step S68 then goes to the step S69 in which the judgment is made upon whether there is a terminator or not. In this embodiment, the judgment is made upon whether the user operates the set button 244 of the remote control device 240 or not while a predetermined time on the basis of the control signal transmitted from the remote control device 240. In other words, the judgment is made in the step S69 upon whether the control signal of the set button 244 is received from the remote control device 240 or not. When the inputting operation is terminated, i.e., the control signal of the set button 244 is received from the remote control device 240, the answer in the step S69 is affirmative "YES". The control is then passed from the step S69 to the step S70. When there is no terminator detected, i.e., the control signal of the set button 244 is not received from the remote control device 240 after the predetermined time past. In this case, the control is then returned from the step S69 to the step S67.

As described above, when the service ID is entered by the user through the remote control device 240, the judgment is made upon whether there is a terminator detected or not. The judgment may be made in the step S69 on the basis of the other terminators than the above control signal of the set button 244. These terminators may be determined by a kind of media, a kind of the terminals or the like. The terminators may be determined by the server machine.

For instance, when the service ID is transmitted from the service provider 250 and then inputted through the modem 25, the above judgment may be made on the basis of the existence of a predetermined terminator also transmitted from the service provider 250. When the service ID is transmitted from the broadcasting station of the broadcasting service information source 70 on the broadcasting wave signal and inputted through the antenna 22, the information processing program included in the received signal may instruct the service providing apparatus 210 to terminate the process of inputting the service ID. When the answer in the step S69 is negative "NO", the control is returned from the step S69 to the step S67.

In the step S70, each of the service IDs stored in the service ID list storage area A1 of the memory 33 is converted into the program IDs appropriate to each of the inputted service IDs on the basis of the relational table stored in the relational table storage area A4 of the memory 33 and a desired procedure customized by the user in the customizing routine. The service information table is then created and stored in the service information table storage area A5 of the memory 33. At the same time, the display unit 15 is operated to display the service information table on the table screen D1 as shown in FIG. 10. The table screen D1 shows a service ID, title of the service corresponding to the service ID, a term of validity of the service, and candidate functions corresponding to the information processing programs.

At this time, the user may previously determine at least a procedure appropriate to the specific service ID from among the service information table displayed on the table screen D1. Then the service providing apparatus 210 may be operated to wait for receiving the specific service ID. When the specific service ID is received, the predetermined procedure may be performed by the service providing apparatus 210. Alternatively, the service providing apparatus 210 may automatically determine procedures appropriate to all of the service IDs from the service information table stored in the memory 33. In this case, the service providing apparatus 210 may be operated to wait for inputting any one of the service IDs stored in the service information table.

The step S70 goes to the step S71, in which the main routine waits for receiving the service ID included in the linked signal. When the service ID is received in the step S71, the step S71 goes to the step S72 in which the judgment is made upon whether the received service ID is matched with the matching criterion or not. When the answer in the step S72 is affirmative "YES", the step S72 goes to the step S73. When the answer in the step S72 is negative "NO", the control is returned from the step S72 to the step S71. In the step S73, the CPU 34 is operated to fetch the selected information processing program from the program storage areas A2 and A3 of the memory 33. The main program is operated to retrieve the service information corresponding to the specified service and function according to the service table and to request the information providing source 50 of the service provider 250 to send the retrieved service information. The CPU 34 is operated to execute the fetched information processing program on the basis of the retrieved service information. When the CPU 34 completely performs the information processing program, the main program may be terminated or may be returned from the step S73 to the step S71 in which the main program is operated to wait for receiving the other service ID included in the linked signal.

In the aforesaid step S65, the judgment may be made upon the term of validity of the service ID. Moreover, in the step S65, the judgment may be made upon whether the inputted service ID is included in the relational table or not. When the judgment is made that the inputted service ID is excluded from the relational table, the service providing apparatus 210 may be operated to request the identifier database 110 of the service provider 250 to send the information on the program IDs appropriate to the service ID. Then, the service providing apparatus 210 may be operated to append the information on the program IDs appropriate to the service ID to the relational table stored in the relational table storage area A4 of the memory 33.

In the aforesaid step S70, the judgment may be made upon the term of validity of the information processing program and the program ID on the basis of version information on the information processing program and/or the program ID. If the information processing program and/or the program ID is invalid, the service providing apparatus 210 may be operated to update the information processing program and/or the program ID. Moreover, when the information processing program corresponding to the selected function is excluded from the service providing apparatus 210, the service providing apparatus 210 may be operated to request the program database 120 of the service provider 250 to send the information processing program.

The above process is thus performed by the service providing apparatus 210. The service providing apparatus 210 can be operated to select the service ID from the received service ID associated with the linked signal to automatically input the selected service ID. The user can previously determine the retrieval condition for retrieving the service ID which satisfies the user's taste. The user can therefore select a desired service from a diversity of services with ease.

The many features and advantages of the invention are apparent from the detailed specification, and thus it is intended by the appended claims to cover all such features and advantages of the invention which fall within the true spirit and scope thereof. Further, since numerous modifications and changes will readily occur to those skilled in the art, it is not desired to limit the invention to the exact construction and operation illustrated and described herein, and accordingly, all suitable modifications and equivalents may be construed as being encompassed within the scope of the invention.

## Claims

1. A service providing apparatus (10; 210) for systematically providing a user with a diversity of services each having a predetermined service identifier, comprising:
inputting means (20; 220) for inputting therethrough said service identifier to the service providing apparatus (10; 210) to specify one of said services;
procedure selection means (30 and 34) for selecting a procedure appropriate to the service identifier inputted through said inputting means (20; 220) from among a plurality of predetermined procedures; and
executing means (40 and 34) for performing the selected procedure on the basis of a predetermined service information to serve a predetermined function (40a, 40b, 41, 43, 45 and 47).

2. The service providing apparatus (10; 210) as set forth in claim 1, in which said executing means (40 and 34) is capable of executing a predetermined information processing program to perform said predetermined function (40a, 40b, 41, 43, 45 and 47) on the basis of said service information, and
said procedure selection means (30 and 34) selecting said information processing program on the basis of the service identifier inputted through said inputting means (20; 220) to be executed by said executing means (40 and 34).

3. The service providing apparatus (10; 210) as set forth in claim 2, in which each of said information processing programs has a program identifier thereof, and
said procedure selection means (30 and 34) storing therein a plurality of program identifiers associated with at least one service identifier and selecting said program identifiers appropriate to said inputted service identifier from among the stored program identifiers.

4. The service providing apparatus (10; 210) as set forth in claim 2, in which said procedure selection means (30 and 34) is capable of displaying a plurality of icons indicative of said predetermined functions (40a, 40b, 41, 43, 45 and 47) corresponding to said selected information processing programs, thereby allowing said user to select one of said displayed icons to specify one of said functions (40a, 40b, 41, 43, 45 and 47), and
said executing means (40 and 34) executing the information processing program corresponding to the specified function (40a, 40b, 41, 43, 45 and 47) in accordance with the user's selection of said icon to perform said specified function (40a, 40b, 41, 43, 45 and 47).

5. The service providing apparatus (10; 210) as set forth in claim 3, in which said procedure selection means (30 and 34) has an identifier storing unit (33 and A1) for storing therein said service identifier and the corresponding program identifiers, and
said procedure selection means (30 and 34) being provided with said service identifier and said corresponding program identifiers by a predetermined identifier information source (110) to store the provided service identifier and said corresponding program identifiers in said identifier storing unit (33 and A1).

6. The service providing apparatus (10; 210) as set forth in claim 5, in which said procedure selection means (30 and 34) requests said identifier information source (110) to supply said program identifiers when said service identifier inputted through said inputting means (20; 220) is excluded from said identifier storing unit (33 and A1).

7. The service providing apparatus (10; 210) as set forth in claim 3, in which said executing means (40 and 34) is provided with said information processing program corresponding to said program identifier by a predetermined program providing source (120).

8. The service providing apparatus (10; 210) as set forth in claim 3, in which said executing means (40 and 34) has a program storing unit (33, A2 and A3) for storing therein a plurality of said information processing programs corresponding to said program identifiers stored in said procedure selection means (30 and 34).

9. The service providing apparatus (10; 210) as set forth in claim 1, in which said service identifier consists of the predetermined number of characters, and
said inputting means (20; 220) allowing said user to enter said characters to input said service identifier therethrough.

10. The service providing apparatus (10; 210) as set forth in claim 1, further comprising availability judgement means (34, 33 and A7) for judging whether the service identifier inputted through said inputting means (20; 220) is available or not on the basis of availability information indicative of an availability of said service identifier, and said availability information being provided by a predetermined identifier information source (110).

11. The service providing apparatus (10; 210) as set forth in claim 2, in which said inputting means (20; 220) inputs attendant property information accompanying said service identifier therethrough, and
said procedure selection means (30 and 34) selecting said information processing programs to be executed by said executing means (40 and 34) on the basis of said attendant property information and said service identifier.

12. The service providing apparatus (10; 210) as set forth in claim 2, in which said executing means (40 and 34) requests a predetermined service providing source (150, 50, 60 and 70; 250) to retrieve and transmit therefrom the service information related to said specified service to execute said selected information processing program to perform said function (40a, 40b, 41, 43, 45 and 47) on the basis of the transmitted service information.

13. The service providing apparatus (10; 210) as set forth in claim 2, in which said executing means (40 and 34) is provided with predetermined information processing program and data by a predetermined program providing source (120), so that the executing means (40 and 34) becomes capable of implementing the additional procedures.

14. The service providing apparatus (10; 210) as set forth in claim 2, further comprising updating time judgement means (34 and A8) for judging whether said information processing program and said program identifier should be updated or not on the basis of version information on at least one of said information processing program and said program identifier.

15. The service providing apparatus (10; 210) as set forth in claim 1, in which said service information includes information on a commodity.

16. The service providing apparatus (10; 210) as set forth in claim 1, further comprising data storage means (33 and A6) for storing therein said service information related on said specified service.

17. The service providing apparatus (10; 210) as set forth in claim 1, in which said inputting means (20; 220) inputs therethrough the service identifier associated with said service by way of a predetermined service information medium (101, 102 and 103).

18. The service providing apparatus (10; 210) as set forth in claim 17, in which said service information medium (101, 102 and 103) is capable of visibly outputting information on said service recorded thereon.

19. The service providing apparatus (10; 210) as set forth in claim 17, in which said service information medium (102) has information on said service written on a paper.

20. The service providing apparatus (10; 210) as set forth in claim 17, in which said service information medium (101 and 103) has information on said service transmitted from outside to said service providing apparatus (10; 210) therethrough.

21. The service providing apparatus (10; 210) as set forth in claim 17, in which said service information medium (103) has information on said service broadcast by a broadcasting station (70).

22. The service providing apparatus (10; 210) as set forth in claim 10, in which said availability information indicates a term of validity of said service identifier.

23. The service providing apparatus (10; 210) as set forth in claim 10, in which said availability information indicates a version number of said service identifier.

24. The service providing apparatus (10; 210) as set forth in claim 2, in which said inputting means (20; 220) receives a predetermined linked signal multiplexed with a predetermined broadcasting program to prepare the service identifier on the basis of the received linked signal to automatically input the prepared service identifier therethrough in response to the received linked signal.

25. The service providing apparatus (10; 210) as set forth in claim 24, in which said procedure selection means (30 and 34) selects the information processing programs on the basis of the automatically inputted service identifier, and
said executing means (40 and 34) executing the selected information processing program so as to follow the operation of said predetermined broadcasting program.

26. The service providing apparatus (10; 210) as set forth in claim 25, in which said linked signal includes attendant information on a present scene in said broadcasting program.

27. The service providing apparatus (10; 210) as set forth in claim 25, in which said linked signal includes a synchronous signal multiplexed with said broadcasting program and synchronized with a present scene in said broadcasting program.

28. The service providing apparatus (10; 210) as set forth in claim 25, further comprising a time control unit (34) for controlling an execution time of said procedure selection means (30 and 34) and said executing means (40 and 34) so that an operation time needed to start executing said information processing program after receiving said linked signal is limited to a predetermined limit time.

29. The service providing apparatus (10; 210) as set forth in claim 25, in which said information processing program is executed by said executing means (40 and 34) to start recording said broadcasting program (103) on video.

30. The service providing apparatus (10; 210) as set forth in claim 25, in which said information processing program is executed by said executing means (40 and 34) to change channels to the channel through which said broadcasting program (103) is broadcast.

31. The service providing apparatus (210) as set forth in claim 2, in which said inputting means has:
a condition storing unit (223, 33 and A9) for storing therein a predetermined retrieval condition previously determined by said user, said information processing program being executed under said retrieval condition by said executing means (40 and 34);
a matching criterion determination unit (221, 33, 34 and A10) for determining a matching criterion for judging whether said service identifier is matched with said retrieval condition and said information processing program or not; and
a matching judgement unit (225 and 34) for judging whether said service identifier is matched with said matching criterion determined by said matching criterion determination unit (221, 33, 34 and A10) or not.

32. The service providing apparatus (210) as set forth in claim 31, in which said inputting means (220) receives a predetermined linked signal including said service identifier and multiplied with a predetermined providing service provided from said service providing source (250, 50, 60 and 70).

33. The service providing apparatus (210) as set forth in claim 32, in which said matching criterion determination unit (33, 34 and A10) receives the service identifier and its attribute information both of which correspond to a new linked signal multiplexed with a predetermined broadcasting program (103) from a predetermined identifier attribute information source (130), and determines the matching criterion for judging whether said received new linked signal is matched with said retrieval condition and said information processing program or not.

34. The service providing apparatus (210) as set forth in claim 31, in which said matching criterion determination unit (33, 34 and A10) transmits said retrieval condition to a predetermined service provider (250, 50, 60 and 70) to request said service provider (250, 50, 60 and 70) to determine said matching criterion according to the transmitted retrieval condition, and receives the determined matching criterion from said service provider (250, 50, 60 and 70), and
said matching judgement unit (34 and 225) judging whether said linked signal is matched with the received matching criterion or not.

35. The service providing apparatus (210) as set forth in claim 25, in which said inputting means (220) receives an attribute information on the service corresponding to said service identifier, said attribute information on the service being multiplied with said linked signal,
said inputting means (220) having:
a condition storing unit (223, 33 and A9) for storing therein a predetermined retrieval condition previously determined by said user, said information processing program being executed under said retrieval condition by said executing means (40 and 34) so that the operation of said information processing program is synchronized with the operation of said predetermined broadcasting program (103);
a matching criterion determination unit (221, 33, 34 and A10) for determining, according to said attribute information, a matching criterion for judging whether said linked signal is matched with said retrieval condition and said information processing program or not; and
a matching judgement unit (225 and 34) for judging whether said received linked signal is matched with said matching criterion determined by said matching criterion determination unit (221, 33, 34 and A10) or not, and
said inputting means (220) inputting therethrough the service identifier corresponding to said received attribute information which is judged to be matched with said matching criterion by said matching judgment unit (34 and 225).

36. The service providing apparatus (10; 210) as set forth in claim 17, further comprising information storing means (33) for storing therein information on said services provided by said service information medium (101, 102 and 103).

37. The service providing apparatus (10; 210) as set forth in claim 36, in which said service information medium (102 and 103) has information on a image.

38. The service providing apparatus (10; 210) as set forth in claim 36, in which said inputting means (220) inputs therethrough the service identifier previously determined by said user,
said service providing apparatus (10; 210) further comprising identifying means (33) for conferring the previously inputted service identifier on said specified service information stored in said information storing means (33) to be identifiable, and
said information storing means (33) storing therein the information having said service identifier.

39. The service providing apparatus (10; 210) as set forth in claim 38, in which said service information related to said specified service includes information on an image provided by media.

40. A service providing system comprising: a service providing apparatus (10; 210) for systematically providing a user with a plurality of services each having a predetermined service identifier, comprising: inputting means (20; 220) for inputting therethrough said service identifier to specify one of said services; procedure selection means (30 and 34) for selecting a procedure appropriate to the service identifier inputted through said inputting means (20; 220) from among a plurality of predetermined procedures; and executing means (40 and 34) for performing the selected procedure on the basis of a predetermined service information to serve a predetermined function (40a, 40b, 41, 43, 45 and 47);
a service providing source (150, 50, 60 and 70; 250) capable of providing said service information for said service providing apparatus (10; 210); and
information control means (34) for executing said information processing program selected by said procedure selection means (30 and 34) of said service providing apparatus (10; 210) and being provided with said service information by said service providing source (150, 50, 60 and 70; 250) to output said service information to said service providing apparatus (10; 210).

41. A service providing method of systematically providing a user with a diversity of services each having a predetermined service identifier, comprising steps of:
(a) inputting said service identifier to specify one of said services;
(b) selecting a procedure appropriate to the service identifier inputted in the step (a) from among a plurality of predetermined procedures; and
(c) performing the selected procedure on the basis of a predetermined service information to serve a predetermined function (40a, 40b, 41, 43, 45 and 47).

42. The service providing method as set forth in claim 41, in which said step (c) has a step of executing a predetermined information processing program to perform said predetermined function (40a, 40b, 41, 43, 45 and 47) on the basis of said service information, and
said step (b) having a step of selecting said information processing program on the basis of the service identifier inputted in the step (a) to be executed in the step (c).

43. The service providing method as set forth in claim 42, in which the step (a) has a step of receiving a predetermined linked signal multiplexed with a predetermined broadcasting program to prepare the service identifier corresponding to the received linked signal to automatically input the prepared service identifier therethrough in response to the received linked signal.

44. The service providing method as set forth in claim 43, in which the step (b) has a step of selecting the information processing programs corresponding to the automatically inputted service identifier, and
the step (c) having a step of executing the selected information processing program so as to follow the operation of said predetermined broadcasting program.

45. The service providing method as set forth in claim 42, in which the step (a) has:
(a1) storing therein a predetermined retrieval condition previously determined by said user, said information processing program being executed under said retrieval condition by the executing step of the step (c);
(a2) determining a matching criterion for judging whether said service identifier is matched with said retrieval condition and said information processing program or not; and
(a3) judging whether said service identifier is matched with said matching criterion determined in said step (a2) or not.
